(19) **Europäisches Patentamt / European Patent Office / Office européen des brevets**

(11) **EP 4 545 172 A1**

(12) **EUROPEAN PATENT APPLICATION**
published in accordance with Art. 153(4) EPC

(43) Date of publication:
**30.04.2025 Bulletin 2025/18**

(21) Application number: **23842185.3**

(22) Date of filing: **12.07.2023**

(51) International Patent Classification (IPC):
**B01D 71/02** $^{(2006.01)}$    **B01D 53/22** $^{(2006.01)}$
**B01D 69/12** $^{(2006.01)}$

(52) Cooperative Patent Classification (CPC):
**B01D 71/022; B01D 53/22; B01D 69/12;**
**B01D 71/0221; B01D 71/0223; C22C 5/04;**
**C22F 1/14;** C22C 1/0466

(86) International application number:
**PCT/CN2023/107041**

(87) International publication number:
**WO 2024/017120 (25.01.2024 Gazette 2024/04)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **18.07.2022  CN 202210841761**
             **18.07.2022  CN 202210843337**
             **18.07.2022  CN 202210843306**
             **18.07.2022  CN 202210843326**

(71) Applicants:
• **China Petroleum & Chemical Corporation**
  **Beijing 100728 (CN)**
• **Sinopec Research Institute of Safety**
  **Engineering Co., Ltd.**
  **Qingdao, Shandong 266104 (CN)**

(72) Inventors:
• **ZHAO, Chenyang**
  **Qingdao, Shandong 266104 (CN)**

• **SUN, Bing**
  **Qingdao, Shandong 266104 (CN)**
• **LIU, Yujia**
  **Qingdao, Shandong 266104 (CN)**
• **JIANG, Jie**
  **Qingdao, Shandong 266104 (CN)**
• **AN, Fei**
  **Qingdao, Shandong 266104 (CN)**
• **ZHU, Hongwei**
  **Qingdao, Shandong 266104 (CN)**
• **ZHU, Yunfeng**
  **Qingdao, Shandong 266104 (CN)**
• **XU, Wei**
  **Qingdao, Shandong 266104 (CN)**
• **YANG, Zhe**
  **Qingdao, Shandong 266104 (CN)**

(74) Representative: **Hoffmann Eitle**
**Patent- und Rechtsanwälte PartmbB**
**Arabellastraße 30**
**81925 München (DE)**

(54) **COMPOSITE PALLADIUM-BASED ALLOY MATERIAL, PREPARATION METHOD THEREFOR, AND USE THEREOF**

(57)    A composite palladium-based alloy material, a preparation method therefor, and a use thereof. The composite palladium-based alloy material comprises Pd and a group IB metal; and in an XRD graph of the composite palladium-based alloy material, the full width at half maximum of at least one characteristic peak for 2θ within the range of 5°-90° is less than or equal to 0.1745.

The present composite palladium-based alloy material has a lower activation energy for hydrogen permeation, a higher hydrogen permeation efficiency, higher stability and carbon deposition resistance, and has a longer service life as a composite membrane (especially in hydrogen production via steam reforming).

**(Cont. next page)**

EP 4 545 172 A1

FIG. 8

**Description**

**CROSS-REFERENCE TO RELATED APPLICATIONS**

The application claims the benefit of the Chinese Patent Applications Numbers "202210841761.4", "202210843337.3", "202210843306.8", and "202210843326.5", filed on July 18, 2022, the contents of which are specifically and entirely incorporated herein by reference.

**TECHNICAL FIELD**

The invention relates to the field of palladium-based alloy material, in particular to a composite palladium-based alloy material, a preparation method therefore, and use thereof.

**BACKGROUND ART**

The hydrogen production process via methanol and steam reforming has emerged as a hot topic concerned by researchers due to characteristics such as wide methanol source, convenient storage and transportation, high hydrogen storage capacity of methanol per unit mass, and low reaction temperature. At present, the research on the catalysts for hydrogen production via methanol and steam reforming is gradually maturing, wherein the most representative catalyst is a $CuO/ZnO/Al_2O_3$ catalyst, which is suitable for the reaction temperature of 150-350°C. Given that the conversion rate of methanol cannot reach 100%, and the target product $H_2$ is inevitably mingled with CO, $CO_2$, $H_2O$, and other ingredients, the subsequent separation and purification process are particularly important. The mature hydrogen separation process at present comprises a cryogenic separation method, a pressure swing adsorption method, a membrane separation method, and the like, wherein the membrane separation method has the advantage of low noise (the noise level is generally 30-40 dB) and compactness, and is particularly suitable for the application scenes with small and medium scales and stringent requirements on hydrogen gas purity, such as the fields of electronics and semiconductors. In the membrane separation process, the metal palladium and the alloy membrane thereof have single selective permeability to hydrogen gas based on the principle of dissolution and diffusion, and the compact membrane material can intercept other impurity gases, and can theoretically realize the separation and purification of hydrogen gas with the purity of 100%, thus the membrane is an ideal means for product separation, for example, CN108686522A discloses an application of a high-temperature-resistant palladium alloy composite membrane in a steam reforming hydrogen production reaction, wherein the palladium alloy composite membrane with the thickness of 1-10$\mu$m loaded on a tubular ceramic carrier is applied to a steam reforming hydrogen production reaction. However, the application of palladium membrane in a methanol and steam reforming system has the following problems to be urgently solved: 1) after the ultra-thin palladium membrane dissolves hydrogen at low temperature (less than 573K), the hydrogen embrittlement is prone to crack and rupture due to the violent change of lattice parameter. 2) Along with the reaction process, the palladium membrane surface is subjected to carbon deposition which causes an increase of hydrogen permeation activation energy, the permeation and diffusion rate of hydrogen gas is reduced, thus the separation and purification efficiency of the product is affected. 3) The non-noble metal catalyst directly contacts with the noble metal palladium membrane material, the permeation and diffusion rate of hydrogen gas and the catalytic activity of the catalyst are prone to degrade resulting from the interaction between the non-noble metal catalyst and the noble metal palladium membrane material. 4) Because of the diversity of raw material sources, sulfur-containing compounds may be mingled into the reaction system, trace amounts of sulfides (e.g., hydrogen sulfide and methyl sulfide) are easier to be adsorbed and accumulated on the surface of a palladium membrane than hydrogen gas, the palladium membrane is apt to be poisoned to form palladium sulfide ($Pd_4S$) after exposure in a sulfur-containing atmosphere for a long time, thereby affecting the hydrogen permeation and diffusion efficiency, no breakthroughs have been made in the sulfur resistance of the above-mentioned palladium membrane. 5) A large amount of carbon dioxide is inevitably generated in the reaction process of hydrogen production via methanol and steam reforming, a series of environmental problems such as the greenhouse effect brought by carbon dioxide emission restrict the further development of the process, as a result, the system confronts with the challenges concerning how to realize the comprehensive utilization of carbon dioxide capture and conversion through the structural design of the membrane reactor, and finally achieve the target of "zero carbon emission".

**SUMMARY OF THE INVENTION**

The invention aims to overcome the problems in the prior art and provides a composite palladium-based alloy material, a preparation method therefor, and use thereof.

In order to achieve the above object, the first aspect of the invention provides a composite palladium-based alloy material comprising Pd and a group IB metal element, the full width at half maximum of at least one characteristic peak for 2θ within the range of 5°-90° is less than or equal to 0.1745 in an X-Ray Diffraction (XRD) graph of the composite palladium-based alloy material.

The second aspect of the invention provides a method for preparing a composite palladium-based alloy material, the method comprises the following steps: depositing Pd and a group IB metal on a support body, and then carrying out an alloying treatment on the support body deposited with the Pd and the group IB metal;

Wherein the alloying treatment mode is as follows: in an activation atmosphere, the heat treatment is initially carried out at a temperature above 350°C and then lowering the temperature to below 200°C at a cooling rate greater than 5°C/min, the gas providing the activation atmosphere optionally includes an alkaline gas.

The third aspect of the invention provides a composite palladium-based alloy material prepared with the method according to the second aspect.

The fourth aspect of the invention provides a composite membrane comprising a composite palladium-based alloy material, and a hydrophobic group-modified silica-alumina molecular sieve attached on a surface of said composite palladium-based alloy material, wherein said composite palladium-based alloy material is the aforementioned composite palladium-based alloy material.

The fifth aspect of the invention provides a use of the aforementioned composite membrane in hydrogen production via steam reforming.

The sixth aspect of the invention provides a method for hydrogen production via steam reforming, the method comprises the following steps:

in the presence of a catalyst, introducing alcohol and steam into a first reactor provided with a first composite membrane to perform a reforming reaction, wherein the first composite membrane is the aforementioned composite membrane; the alcohol and steam are introduced from a side adjacent to the hydrophobic group-modified silica-alumina molecular sieve of the first composite membrane, such that hydrogen gas generated by the reforming reaction is removed from the first reactor by permeating through the first composite membrane via the side of the hydrophobic group-modified silica-alumina molecular sieve.

Due to the technical scheme, the composite membrane prepared with the composite palladium-based alloy material in the invention has lower activation energy for hydrogen permeation, a higher hydrogen permeation efficiency and stability, and a strong carbon deposition resistance, thereby further prolonging the service life of the composite membrane; in addition, the use of the composite membrane of the invention in hydrogen production via steam reforming can ensure the catalytic reactivity of the catalyst and the mechanical structural integrity of the composite palladium-based alloy material.

According to a preferred embodiment of the invention, by using a molecular sieve as a protective layer of the composite palladium-based alloy material, the resulting composite membrane has a high hydrogen permeation and diffusion rate, and the non-noble metal catalyst and the noble metal palladium membrane material do not contact directly, the permeation and diffusion rate of hydrogen gas and the catalytic activity of the catalyst are kept stable due to reduced susceptibility.

According to another preferred embodiment of the invention, the composite membrane following the hydrophobic treatment has a stronger sulfur resistance and carbon deposition resistance, a lower hydrogen permeation activation energy, and a longer service life. The sulfur-resistant metal oxide nanoparticles on the surface of the molecular sieve can activate and decompose sulfur-containing compounds so that the sulfur resistance of the composite membrane is further improved.

According to a further preferred embodiment of the invention, the composite membrane of the invention is combined with another palladium membrane for capturing or converting carbon dioxide obtained from hydrogen production via steam reforming, so that carbon dioxide is converted into a product with a high value-added, thereby improving the comprehensive utilization rate of carbon dioxide and alleviating the environmental problems caused by carbon dioxide emission.

## BRIEF DESCRIPTION OF THE DRAWINGS

FIG. 1 is a schematic diagram of hydrogen production via alcohol and steam reforming of the hydrophobically treated ZSM-5/PdAu composite membrane;

FIGS. 2a-2c show the XRD characteristic spectrograms of the composite palladium-based alloy material and the molecular sieve structure;

FIG. 3 is an experimental graph showing the contact angle of the composite membrane with different liquids before the hydrophobic treatment;

FIG. 4 is an experimental graph showing the contact angle of the composite membrane with different liquids after the hydrophobic treatment;

FIG. 5 illustrates the infrared characterization results of hydroxyl groups before and after the hydrophobic treatment;

FIG. 6 illustrates the Nuclear Magnetic Resonance (NMR) characterization results before and after the hydrophobic treatment;

FIG. 7 illustrates the Scanning Electron Microscope (SEM) images of the surface of the composite membrane after loading with $MoO_2$ nanoparticles;

FIG. 8 is a structural schematic view showing that a catalyst and a composite membrane are encapsulated and subsequently placed in a tubular reactor.

## DESCRIPTION OF THE PREFERRED EMBODIMENT

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point values of the various ranges, and the individual point values may be combined with one another to produce one or more new numerical ranges, which should be deemed have been specifically disclosed herein.

The invention provides a composite palladium-based alloy material, it is characterized in that the composite palladium-based alloy material comprises Pd and a group IB metal element, the full width at half maximum of at least one characteristic peak for $2\theta$ within the range of 5°-90° is less than or equal to 0.1745in an X-Ray Diffraction (XRD) graph of the composite palladium-based alloy material.

In the invention, the crystal structure of the composite palladium-based alloy material is a face-centered cubic close packing (FCC) or a body-centered cubic packing (BCC), wherein the "face-centered cubic close packing" refers to that 14 atoms involved in a crystal cell belong to 4 layers as follows: taking a vertex angle as the layer A, 3 face-centered atoms and 3 vertex angle atoms which are proximate to the layer A belong to the layer B, the next 6 atoms belong to the layer C, and a vertex angle is opposite to the vertex angle of the layer A and is positioned in the layer A of the next cycle. The "body-centered cubic packing" refers to a close packing mode in the cubic system, it comprises 2 lattice points, one point at the vertex and another point at the body center, namely eight atoms are positioned at eight vertexes of the cube, one atom is located at the center of said cube, and the eight atoms at the vertex are tangent with the central atom respectively.

In the invention, the composite palladium-based alloy material has a lattice parameter k within the range of 0.3836-0.4369nm, preferably within the range of 0.4075-0.4289nm. The term "lattice parameter k" refers to the physical dimensions of the crystal cells in the lattice and represents the fundamental structural parameter of a crystalline material. The lattice parameter k denotes the side length of the crystal cell (i.e., the side length of each parallelepiped unit, which has a direct relationship with the bonding energy between the atoms). A crystal cell in three-dimensional space generally has 3 lattice parameters, denoted by a, b, and c, respectively, and according to the morphological distribution of the Bravais Lattice, in the cubic crystal structure associated with the invention, the 3 constants are equal and can therefore be denoted by the parameter k. The change in said parameter k reflects the variation of ingredients, stress state, and the like inside the crystal. The lattice parameter k can be measured by X-Ray Diffraction (XRD) or Atomic Force Microscopy (AFM).

According to a preferred embodiment of the invention, the full width at half maximum of all the characteristic peaks for $2\theta$ within the range of 5°-90°is less than or equal to 0.1745 in an XRD graph of the composite palladium-based alloy material, more preferably less than or equal to 0.084, or less than or equal to 0.078, or less than or equal to 0.072, or less than or equal to 0.069, or less than or equal to 0.064, or less than or equal to 0.055, or less than or equal to 0.039; it is usually larger than or equal to 0.01, or larger than or equal to 0.017, or larger than or equal to 0.029, or larger than or equal to 0.031, or larger than or equal to 0.032, or larger than or equal to 0.052, or larger than or equal to 0.059, or larger than or equal to 0.062, or larger than or equal to 0.068, or larger than or equal to 0.073, and further preferably larger than or equal to 0.017.

More preferably, when the composite palladium-based alloy material has a face-centered cubic close packing structure, in its XRD graph, the full width at half maximum of the characteristic peak at $2\theta=40°\pm1°$ (i.e., the characteristic peak of a crystal plane (110)) is less than or equal to 0.0555, or less than or equal to 0.0198; or the full width at half maximum of the characteristic peak at $2\theta=46°\pm1°$ (i.e., the characteristic peak of a crystal plane (111)) is less than or equal to 0.0699, or less than or equal to 0.0332; or the full width at half maximum of the characteristic peak at $2\theta=69°\pm1°$ (i.e., the characteristic peak of a crystal plane (220)) is less than or equal to 0.0873, or less than or equal to 0.0352; or the full width at half maximum of the characteristic peak at $2\theta=83°\pm1°$ (i.e., the characteristic peak of a crystal plane (311)) is less than or equal to 0.1047, or less than or equal to 0.039; or the full width at half maximum of the characteristic peak at $2\theta=87°\pm1°$ (i.e., the characteristic peak of a crystal plane (222)) is less than or equal to 0.1396, or less than or equal to 0.0402. Further, in an XRD graph of the composite palladium-based alloy material, the full width at half maximum of the characteristic peak at $2\theta=40°\pm1°$ is within the range of 0.017-0.02, or the full width at half maximum of the characteristic peak at $2\theta=46°\pm1°$ is within the range of 0.017-0.034, or the full width at half maximum of the characteristic peak at $2\theta=69°\pm1°$ is within the range of 0.029-0.036, or the full width at half maximum of the characteristic peak at $2\theta=83°\pm1°$ is within the range of 0.031-0.039, or the full width at half maximum of the characteristic peak at $2\theta=87°\pm1°$ is within the range of 0.032-0.041.

More preferably, when the composite palladium-based alloy material has a body-centered cubic packing structure, in its XRD graph, the full width at half maximum of the characteristic peak at $2\theta=43°\pm1°$ (i.e., the characteristic peak of a crystal plane (110)) is less than or equal to 0.0722, or less than or equal to 0.058; or the full width at half maximum of the characteristic peak at $2\theta=53°\pm1°$ (i.e., the characteristic peak of a crystal plane (111)) is less than or equal to 0.0873, or less than or equal to 0.073; the full width at half maximum of the characteristic peak at $2\theta=62°\pm1°$ (i.e., the characteristic peak of a crystal plane (200)) is less than or equal to 0.0873, or less than or equal to 0.086; the full width at half maximum of the characteristic peak at $2\theta=70°\pm1°$ (i.e., the characteristic peak of a crystal plane (210)) is less than or equal to 0.1047, or less than or equal to 0.088; the full width at half maximum of the characteristic peak at $2\theta=79°\pm1°$ (i.e., the characteristic peak of a crystal plane (211)) is less than or equal to 0.1571, or less than or equal to 0.103. Further, in an XRD graph of the composite palladium-based alloy material, the full width at half maximum of the characteristic peak at $2\theta=43°\pm1°$ is within the range of 0.017-0.041, or the full width at half maximum of the characteristic peak at $2\theta=53°\pm1°$ is within the range of 0.024-0.055, the full width at half maximum of the characteristic peak at $2\theta=62°\pm1°$ is within the range of 0.036-0.066, the full width at half maximum of the characteristic peak at $2\theta=70°\pm1°$ is within the range of 0.047-0.068, the full width at half maximum of the characteristic peak at $2\theta=79°\pm1°$ is within the range of 0.051-0.074. The term "full width at half maximum" is defined as the peak width at half of the peak height, i.e., the peak width at the half-height, and the peak width at the half-height is converted to radians according to the Debye-Scherrer Equation ($D=K\gamma/B\cos\theta$), to characterize the full width at half maximum with the radian value. The full width at half maximum is regarded as 0 when the composite palladium-based alloy material has no characteristic peak at the corresponding $2\theta$.

According to the composite palladium-based alloy material of the invention, a group IB metal element may improve the permeation and diffusion properties such as solubility and diffusivity of hydrogen gas of the resulting composite palladium-based alloy material, the group IB metal element may be at least one of Cu, Ag, and Au, preferably Au.

In the composite palladium-based alloy material according to the invention, the group IB metal element is Au, and in an XRD graph of the composite palladium-based alloy material, the full width at half maximum of the characteristic peak at $2\theta=40°\pm1°$ is denoted as $FWHM_1$, the full width at half maximum of the characteristic peak at $2\theta=46°\pm1°$ is denoted as $FWHM_2$, the full width at half maximum of the characteristic peak at $2\theta=69°\pm1°$ is denoted as $FWHM_3$, the full width at half maximum of the characteristic peak at $2\theta=83°\pm1°$ is denoted as $FWHM_4$, the full width at half maximum of the characteristic peak at $2\theta=87°\pm1°$ is denoted as $FWHM_5$, $FWHM_1$, $FWHM_2$, $FWHM_3$, $FWHM_4$ and $FWHM_5$ satisfy the following formula I:

$$FWHM_x = (FWHM_{x-1} + FWHM_{x+1})/2 \pm W \qquad \text{Formula I}$$

Wherein x =2, 3, or 4, and W is within the range of 0.0003-0.0064. When the full widths at half maximum of characteristic peaks satisfy formula I, the composite palladium-based alloy material has better hydrogen permeation efficiency and stability.

The composite palladium-based alloy material according to the invention may further contain Ni. Preferably, the molar ratio of Pd/Ni is 1: (0.35-0.65).

The composite palladium-based alloy material according to the invention is membranous. The thickness of the composite palladium-based alloy material may be within the range of 0.5-30µm, preferably within the range of 5-15µm.

According to an embodiment of the invention, the composite palladium-based alloy material may be the composite palladium-based alloy material E mentioned later.

The present inventors have discovered in research that performing an alloying treatment in a specific manner is particularly conducive to improving the hydrogen permeability and stability of the resulting composite palladium-based alloy material, thus the invention also provides a method for preparing a composite palladium-based alloy material, it is characterized in that the method comprises the following steps: depositing Pd, a group IB metal and optionally Ni on a support body, and then carrying out an alloying treatment on the support body deposited with Pd, a group IB metal and optionally Ni; wherein the molar ratio of Pd to the group IB metal element is preferably 1: (0.01-10), more preferably 1: (0.1-1.6), further preferably 1: (0.2-0.8).

Wherein the alloying treatment mode is as follows: in an activation atmosphere, the heat treatment is initially carried out at a temperature above 350°C (e.g., 500°C, 540°C, 550°C, 560°C, 570°C, 580°C, 590°C, 600°C or any value therebetween) and then lowering the temperature to below 200°C at a cooling rate greater than 5°C/min (e.g., 30°C/min, 35°C/min, 40°C/min, 45°C/min, 55°C/min, 65°C/min, 70°C/min, 80°C/min, 100°C/min or any value therebetween), the gas providing the activation atmosphere optionally includes an alkaline gas.

In the invention, the molar ratio of the group IB metal element (or group IB metal) to Pd maybe 0.05, 0.1, 0.2, 0.25, 0.3, 0.4, 0.5, 0.6, 0.7, 0.8, 0.9, 1, 1.1, 1.2, 1.3, 1.4, 1.5, 1.6, 3, 5, 8, 9, or any value between the numerical values, preferably within the range of 0.1-1.6, more preferably within the range of 0.2-0.8.

In the invention, the molar ratio of Ni/Pd is preferably within the range of 0.35-0.65, such as 0.4, 0.45, 0.5, 0.55, 0.58, 0.6, 0.62 or any value between the numerical values.

In the invention, the group IB metal may be at least one of Cu, Ag, and Au, but preferably Au.

In a preferred embodiment of the invention, the alloying treatment is carried out in a mode as follows: after treatment in an activation atmosphere at a temperature of 350-650°C and a pressure of 0.12-0.75 MPa for 2-10h; then lowering the temperature to 100-200°C at a cooling rate of 25-150°C/min. The composite palladium-based alloy material obtained according to the preferred embodiment has a higher hydrogen permeability or stability.

In the invention, the gas providing the activation atmosphere may be a conventional gas in the art which exhibits a gaseous state under the alloying treatment conditions, but preferably, the activation atmosphere is provided by at least one of a rare gas (e.g., Ar), $N_2$, steam, $H_2$, an acid gas (e.g., $CO_2$), an alkaline gas (e.g., ethylenediamine and $NH_3$, $PH_3$, $N_2H_4$). According to a preferred embodiment of the invention, the gas providing the activation atmosphere comprises hydrogen gas and nitrogen gas, and the content of hydrogen gas in the mixed gas consisting of hydrogen gas and nitrogen gas is 30 vol.% or more, more preferably within the range of 35-70 vol.%, wherein the addition of an alkaline gas enables the palladium-based alloy membrane to be activated more quickly, the formed face-centered cubic structure is more stable, and the full width at half maximum of the characteristic peak in XRD graph is smaller, thus the gas providing the activation atmosphere preferably comprises an alkaline gas.

According to a preferred embodiment of the invention, the gas providing the activation atmosphere comprises hydrogen gas and an alkaline gas. Preferably, the content of alkaline gas in the gas providing the activation atmosphere is 20% or more by volume, such as 22vol.%, 25vol.%, 28vol.%, 30vol.%, 40vol.%, 50vol.%, or any value therebetween, more preferably, larger than or equal to 30vol.%. A similar effect can also be obtained if the gas providing the activation atmosphere is only an alkaline gas.

The alkaline gas may be an organic alkaline gas or an inorganic alkaline gas; more preferably, the alkaline gas is at least one selected from ethylenediamine, $NH_3$, $PH_3$ (phosphine), and $N_2H_4$ (hydrazine).

In the invention, the pressure of the alloying treatment is generally controlled by adjusting the dosage of the gas providing the activation atmosphere. After dropping below 200°C at a specified rate, the alloy material may be cooled down to room temperature and set aside.

In a preferred embodiment of the invention, the total thickness of Pd and a group IB metal deposited on the support body is within the range of 0.5-30$\mu$m, preferably within the range of 5-15$\mu$m. The methods of depositing Pd and the group IB metal on the support body may be various methods commonly used in the art, for example, at least one of the vapor deposition methods (e.g., physical vapor deposition or chemical vapor deposition), an electroless plating method, electroplating method, and electroforming method, preferably at least one of electroplating method and electroless plating method.

In a preferred embodiment of the invention, the support body has a thickness within the range of 0.1-20mm, preferably within the range of 2-5mm. The support body may be provided by a material commonly known in the art that can withstand the operating temperature of the invention without affecting the hydrogen permeability, that is, the material that does not deform at the operating temperature of the invention, and the hydrogen permeability is not affected. To obtain more excellent mechanical and thermal stability and reduce the used amount of palladium (reduce costs) on the basis of ensuring excellent hydrogen permeability, the support body is preferably a porous support body, which may be at least one selected from the group consisting of porous ceramic, porous glass, porous metal (e.g. porous stainless steel), porous quartz, and high polymer, more preferably at least one selected from the group consisting of porous ceramic, porous metal, and high polymer. Typically, the support body has a porosity distribution within the range of 15-75% and an average pore size within the range of 0.05-0.4$\mu$m. For the sake of obtaining a tubular membrane, the support body is preferably tubular. The porous ceramic material may be $\gamma$-$Al_2O_3$, it has a porosity distribution within the range of 25-66% and an average pore size of 0.12-0.4$\mu$m. The porous stainless steel material may be 316L ($Fe_{69}Cr_{17}Ni_{12}Mo_2$), it has a porosity distribution within the range of 32-71% and an average pore size of 0.08-0.36$\mu$m. The high polymer material may be polyimide, which has a porosity distribution within the range of 15-37%, and an average pore size of 0.05-0.22$\mu$m. The "porosity distribution range" may be measured by the physical adsorption method of nitrogen gas. The "average pore size" may be determined by the physical adsorption method of nitrogen gas.

The invention also provides composite palladium-based alloy material prepared with the aforementioned method.

According to the invention, in order to further improve the sulfur resistance, chlorine resistance, carbon deposit resistance, and other properties of the composite palladium-based alloy material, the composite palladium-based alloy material may also be coated with a protective layer, which does not affect the hydrogen permeation properties ($E_{act}$, $J_{H2}$ and $J_{N2}$) of the composite palladium-based alloy material, and may be the conventional protective layer in the art, such as modified molecular sieve or unmodified molecular sieve. The invention further provides a composite membrane, it is characterized in that the composite membrane comprises a composite palladium-based alloy material, and a hydrophobic group-modified silica-alumina molecular sieve attached on a surface of said composite palladium-based alloy material, wherein said composite palladium-based alloy material is the aforementioned composite palladium-based alloy material, or the composite palladium-based alloy material prepared with the aforementioned method.

According to the invention, the composite membrane has a water contact angle larger than or equal to 90°, preferably larger than or equal to 105°.

The composite membrane according to the invention is preferably a tubular membrane.

The composite membrane according to the invention further comprises a support body on which the composite palladium-based alloy material is attached, the thickness and types of the support body are as previously described, the content will not be repeated here.

The composite membrane according to the invention, preferably, the ratio of peak areas (i.e., $Q_4/Q_3$) for peaks with chemical shifts near -113ppm and -103ppm of the hydrophobic group-modified silica-alumina molecular sieve in the $^{29}Si$ MAS nuclear magnetic resonance spectrogram is within the range of 6-12.

In the composite membrane according to the invention, the hydrophobic groups of the hydrophobic group-modified silica-alumina molecular sieve may be provided by the common substance which is attached to the molecular sieve through electrostatic adsorption or coordination bonds to improve the hydrophobicity of the molecular sieve, for example, the hydrophobic groups may be provided by at least one of polymethylhydrosiloxane, vinyltriethoxysilane, 3-aminopropyltriethyl silane, N,N-diethyltrimethylsilane, 3-aminopropyltrimethoxy silane, (3-mercaptopropyl) trimethoxysilane, 3-aminopropyltriethoxy silane, N,N-diethyl-3-(trimethoxysilyl) propylamine, 1-[3-(trimethoxysilyl) propyl]urea, (3-chloropropyl)trimethoxysilane, 3-chloropropyltriethoxy silane, preferably provided by at least one of polymethylhydrosiloxane, vinyltriethoxysilane, 3-aminopropyltriethyl silane, N,N-diethyltrimethylsilane, and 3-aminopropyltrimethoxy silane.

In the composite membrane according to the invention, the silicon-aluminum molecular sieve is at least one of ZSM-5, ZSM-11, ZSM-12, ZSM-23, ZSM-34, 3A molecular sieve, 4A molecular sieve, 5A molecular sieve, SAPO-31, SAPO-34, SAPO-44, RUB-13, MCM-68, Y-type molecular sieve, and mordenite, preferably a ZSM-5 molecular sieve. The combination of the preferred molecular sieve of the invention with the composite palladium-based alloy material can further improve the efficiency of hydrogen production via reforming.

In the composite membrane according to the invention, the hydrophobic group-modified silica-alumina molecular sieve has a thickness within the range of 1-100μm, preferably within the range of 5-30μm.

In the composite membrane according to the invention, the hydrophobic group-modified silica-alumina molecular sieve may have a molar ratio of Si/Al within the range of (2-100): 1, preferably within the range of (2.5-20): 1. The hydrophobic group-modified silica-alumina molecular sieve may have an average particle diameter within the range of 60-380nm, preferably within the range of 150-200nm. The hydrophobic group-modified silica-alumina molecular sieve may have an average pore diameter within the range of 0.3-230nm, preferably within the range of 1-18nm. The hydrophobic group-modified silica-alumina molecular sieve may have a specific surface area within the range of 35-750m$^2$/g, preferably within the range of 65-480m$^2$/g. The hydrophobic group-modified silica-alumina molecular sieve may have a crystallinity larger than or equal to 90%, preferably within the range of 95-99%.

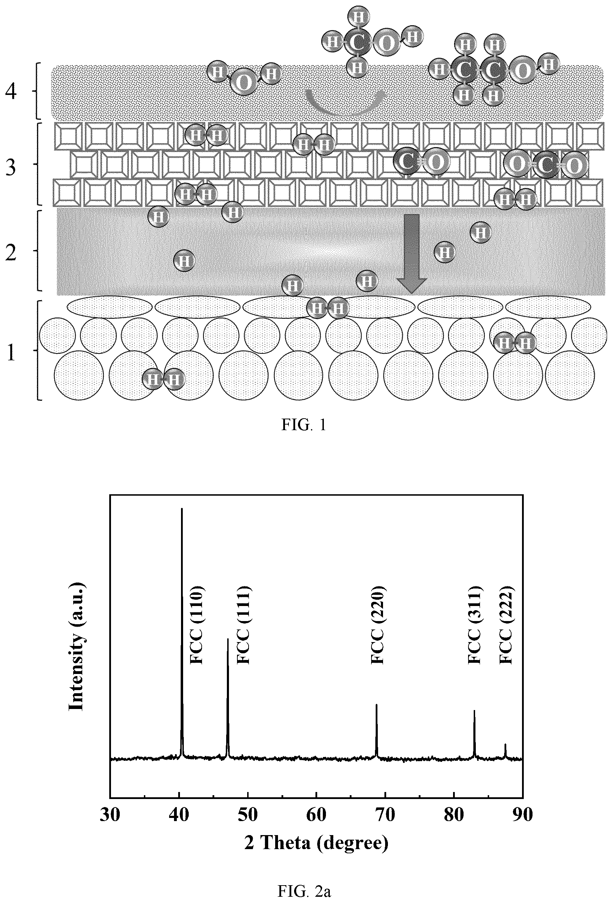

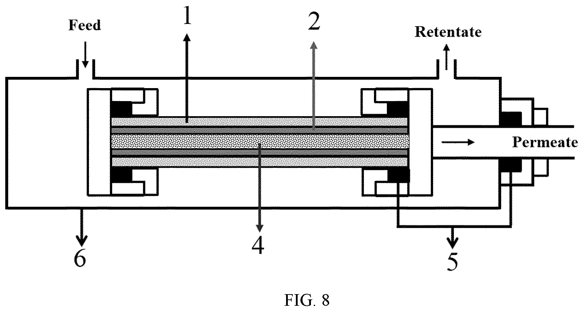

In order to improve the sulfur resistance of the composite membrane according to the invention to adapt to the hydrogen production process via reforming based on a sulfur-containing feedstock, the composite membrane may further comprise oxide nanoparticles of a group VIB metal attached to a surface of the hydrophobic group-modified silica-alumina molecular sieve. Preferably, the group VIB metal is Mo and/or W (or the group VIB metal oxide is $MoO_2$ and/or $WO_3$), more preferably Mo (or the group VIB metal oxide is $MoO_2$). Preferably, the average particle diameter of the group VIB metal oxide nanoparticles is within the range of 50-200nm. Preferably, the group VIB metal oxide nanoparticles are contained in an amount such that the molar ratio of the group VIB metal to Pd is within the range of 0.01-0.5. In a preferred embodiment, as shown in FIG. 1 and FIG. 8, the composite membrane comprises a support body 1, a composite palladium sodium-based alloy material 2, a hydrophobic group-modified silica-alumina molecular sieve 3, and optionally the group VIB metal oxide nanoparticles attached on the support body 1 in sequence. When the composite membrane of the invention is used for hydrogen production via reforming, a catalyst 4 for catalyzing the reforming reaction is further attached to the support body 1, so that the reforming reaction is performed at the side close to the catalyst, and the generated hydrogen gas sequentially permeates the group VIB metal oxide nanoparticles, the hydrophobic group-modified silica-alumina molecular sieve 3, the composite palladium sodium-based alloy material 2 and the support body 1.

The invention also relates to a method for preparing the composite membrane, it is characterized in that the method comprises the following steps:

(1) Depositing Pd, a group IB metal and optionally Ni on a support body, and then carrying out an alloying treatment on the support body deposited with the Pd, the group IB metal and optionally Ni; wherein the molar ratio of Pd to the IB group metal is preferably 1: (0.01-10), more preferably 1: (0.1-1.6), further preferably 1: (0.2-0.8);

Wherein the alloying treatment mode is as follows: in an activation atmosphere, the heat treatment is initially carried out at a temperature above 350°C and then lowering the temperature to below 200°C at a cooling rate greater than 5°C/min, the gas providing the activation atmosphere optionally includes an alkaline gas;

(2) Placing the material following the alloying treatment in a solution containing a silicon-aluminum molecular sieve precursor for subjecting to hydrothermal crystallization, drying, and roasting in sequence to obtain a composite membrane precursor;

(3) Modifying the composite membrane precursor with a hydrophobic group.

In the method for preparing the composite membrane, the alloying treatment, the group IB metal, the activation atmosphere, the support body, and the like in step (1) may be as previously mentioned, the content will not be repeatedly described herein.

In the method of preparing a composite membrane, the solution containing a silicon-aluminum molecular sieve precursor generally comprises a silicon source, an aluminum source, a templating agent, and water.

Preferably, the molar ratio of the silicon source to the aluminum source, the templating agent and water is 100: (1-50): (10-55): (50-2,750), more preferably 100: (5-40): (25-50): (75-1,500).

Preferably, the used amount of the solution containing a silicon-aluminum molecular sieve precursor is 0.05-2 ml relative to 1g of the material following the alloying treatment.

Wherein the silicon source may be a commonly used substance in the art that can provide silicon element, the silicon source is preferably at least one of silicate ester, silicate, and silicon dioxide, and more preferably at least one selected from the group consisting of tetrabutyl orthosilicate, tetraethyl orthosilicate, sodium silicate, potassium silicate, silica sol, and water glass.

Wherein the aluminum source may be a commonly used substance in the art that can provide aluminum element, the aluminum source is preferably at least one of metaaluminate, alumina, aluminum salt, aluminum sol, and organic aluminum alkoxide, and more preferably at least one selected from the group consisting of sodium metaaluminate, pseudo-boehmite, aluminum sulfate, aluminum nitrate and aluminum isopropoxide.

Preferably, the templating agent is at least one of tetraalkylammonium hydroxide, alkylamine, and tetraalkylammonium halide, more preferably at least one selected from the group consisting of tetrabutylammonium hydroxide, tetrapropylammonium hydroxide, tetraethylammonium hydroxide, triethylamine, hexadecyltrimethylammonium bromide, and isopropylamine.

**In** the method for preparing the composite membrane, the hydrothermal crystallization mode may be initially aging and then crystallizing.

Preferably, the aging conditions include: the aging temperature being within the range of 60-90°C.

Preferably, the aging conditions further include: the aging time being within the range of 3-9h.

Preferably, the crystallization conditions include: the crystallization temperature being within the range of 150-185°C.

Preferably, the crystallization conditions further include: the crystallization time is within the range of 12-72h.

The aging process of the invention may be carried out under stirring conditions, and preferably, the stirring rate for the aging process is within the range of 600-1,200 rpm. The crystallization process according to the invention can also be performed under stirring conditions, and preferably, the stirring rate for the crystallization process is within the range of 15-30 rpm.

In the method for preparing the composite membrane, the drying conditions are not particularly defined and may include: the drying temperature being within the range of 50-80°C. The drying conditions may further comprise: the drying time is within the range of 4-18h.

In the method for preparing the composite membrane, preferably, the roasting conditions include: the roasting temperature being within the range of 500-650°C. Preferably, the roasting conditions further comprise: the roasting time is within the range of 4-10h.

In the method for preparing the composite membrane, the mode of modifying the composite membrane precursor with a hydrophobic group is preferably: subjecting the composite membrane precursor to a silanization treatment using a silylating reagent, and a chemical vapor deposition method may be used.

Preferably, the silylating reagent is used in an amount of 3-9 ml relative to 1g of the composite membrane precursor.

Preferably, the silylating reagent may be selected from the commonly used substances in the art which are capable of silylating the molecular sieves to increase their hydrophobicity, for example, the silylating reagent is at least one selected from the group consisting of polymethylhydrosiloxane, vinyltriethoxysilane, 3-aminopropyltriethoxysilane, N,N-diethyltrimethylsilane, 3-aminopropyltrimethoxysilane, (3-mercaptopropyl)trimethoxysilane, 3-aminopropyltriethoxysilane, N,N-diethyl-3-(trimethoxysilyl) propylamine, 1-[3-(trimethoxysilyl)propyl urea, (3-chloropropyl)trimethoxysilane, and 3-chloropropyltriethoxysilane, preferably at least one selected from the group consisting of polymethylhydrosiloxane, vinyltriethoxysilane, 3-aminopropyltriethoxysilane, N,N-diethyltrimethylsilane, and 3-aminopropyltrimethoxysilane.

Preferably, the silanization treatment conditions may comprise: the temperature is within the range of 15-75°C, preferably 30-55°C; the pressure is within the range of 10-70 kPa. The silylating reagent may be introduced by a purge gas (which may be $N_2$, noble gas, $CO_2$, etc.) at a flow rate of 35-75 ml/min.

In the method for preparing the composite membrane, in order to improve the sulfur resistance of the composite membrane, the method may further comprise: (4) depositing the group VIB metal oxide nanoparticles on a surface of the product modified by the hydrophobic groups obtained in the step (3).

Preferably, the group VIB metal is Mo and/or W (or the group VIB metal oxide is $MoO_2$ and/or $WO_3$), more preferably Mo (or the group VIB metal oxide is $MoO_2$).

Preferably, the group VIB metal oxide nanoparticles have an average particle diameter within the range of 50-200nm.

Preferably, the group VIB metal oxide nanoparticles are deposited in an amount such that the molar ratio of the group VIB metal to Pd is within the range of 0.01-0.5.

In the method for preparing the composite membrane, the method for depositing the group VIB metal oxide nanoparticles is not particularly limited, and the group VIB metal oxide nanoparticles may be synthesized in situ by a hydrothermal synthesis method, the depositing method may specifically comprise the following steps: under the condition of hydrothermal synthesis, impregnating the product modified by the hydrophobic groups obtained in step (3) into a solution containing the group VIB metal precursor. Preferably, the concentration of the group VIB metal element in the solution containing the group VIB metal precursor is within the range of 0.01-0.55 mol/L, wherein the group VIB metal precursor may be selected from molybdates and/or tungstates, preferably at least one selected from the group consisting of $(NH_4)_6Mo_7O_2$, sodium tungstate, sodium molybdate, potassium molybdate, and strontium molybdate. According to a particular embodiment of the invention, the molar ratio of $(NH_4)_6Mo_7O_2$, $(NH_4)_2CO_3$, $N_2H_4$, and LiOH in the solution containing the group VIB metal precursor is 1: (1-5): (5-8): (2-5). Preferably, the conditions of the hydrothermal synthesis (impregnation) may comprise the temperature within the range of 150-250°C, and the time within the range of 24-40h.

The invention also relates to a composite membrane produced with the process of preparing a composite membrane as described above.

The invention also provides a use of the composite membrane in hydrogen production via steam reforming.

By using the composite membrane of the invention, the high-purity hydrogen gas having a purity of more than 99.999% can be obtained. Accordingly, the invention further provides a method for hydrogen production via steam reforming, it is characterized in that the method comprises the following steps:

In the presence of a catalyst, introducing alcohol and steam into a first reactor provided with a first composite membrane to perform a reforming reaction, wherein the first composite membrane is the composite membrane as described above; the alcohol and steam are introduced from a side of the hydrophobic group-modified silica-alumina molecular sieve adjacent to the first composite membrane, such that hydrogen gas generated by the reforming reaction is removed from the first reactor by permeating through the first composite membrane via the side of the hydrophobic group-modified silica-alumina molecular sieve;

Optionally, the method further comprises a step of introducing a gas that is not permeated through the first composite membrane into a second reactor provided with a second composite membrane for performing carbon dioxide capture or conversion.

In the method of hydrogen production via steam reforming, the alcohol may be a monohydric alcohol having 1-6 carbon atoms and/or a dihydric alcohol having 1-6 carbon atoms, preferably at least one selected from the group consisting of methanol, ethanol, ethylene glycol, and propanol.

In the method of hydrogen production via steam reforming, the catalyst may be a catalyst commonly used in the art for catalyzing the hydrogen production via steam reforming, and may be, for example, at least one selected from the group consisting of $CuO/ZnO/Al_2O_3$, $Ru/Al_2O_3$, $Cu-Ir/Al_2O_3$, $Pd/ZnO$, $CuO/Fe_2O_3/ZrO_2$, $CuOALa_2O_3/ZrO_2$, $CuO/ZnO/ZrO_2/Al_2O_3$, and $CuO/ZnO/La_2O_3/Al_2O_3$, preferably at least one of $CuO/ZnO/Al_2O_3$, $Pd/ZnO$, and $CuO/Fe_2O_3/ZrO_2$. In the catalyst $CuO/ZnO/Al_2O_3$, the molar ratio of Cu, Zn, and Al maybe 1: (0.1-2): (0.05-2.2), preferably 1: (0.2-1.25): (0.1-1.25). In the catalyst $Pd/ZnO$, the molar ratio of Pd to ZnO may be 1: (0.5-15), preferably 1: (2.5-8). In the catalyst $CuO/Fe_2O_3/ZrO_2$, the molar ratio of Cu, Fe, and Zr maybe 1: (0.01-0.75): (0.1-5.6), preferably 1: (0.02-0.65): (0.8-2.3).

In the method of hydrogen production via steam reforming, the volume ratio of alcohol to steam maybe 1: (0.2-6.8), preferably 1: (0.5-3).

In the method of hydrogen production via steam reforming, the reforming reaction conditions may comprise: the temperature is within the range of 125-725°C, preferably within the range of 175-475°C. The gaseous hourly space velocity of the alcohol and the steam (raw material gas) is within the range of 1,250-25,500 $h^{-1}$, preferably within the range of 3,750-15,000 $h^{-1}$. The reforming reaction conditions may further comprise the pressure within the range of 0.01-1.25 MPa, preferably within the range of 0.05-0.75 MPa.

In the hydrogen production method via steam reforming, the method further comprises a step of introducing a gas that is not permeated through the first composite membrane into a second reactor provided with a second composite membrane for performing carbon dioxide capture (physical recovery) or conversion (chemical recovery).

The present inventors discover a certain correlation exists between the hydrogen permeation and diffusion rate and the lattice parameter value of the palladium membrane, determine the lattice parameter of the palladium membrane according to the desired hydrogen permeation and diffusion rate, and select a preparation process or a preparation raw material according to the lattice parameter, thereby simplifying the preparation process and the raw material, and enabling the preparation and the use of the palladium membrane to have more pertinence. Therefore, according to one embodiment of the invention, the method of hydrogen production via steam reforming may further comprise the following steps: determining the lattice parameter k of the palladium membrane according to the hydrogen permeation and diffusion rate $J_{H2}$ (typically 0.2-0.4 mol·m$^{-2}$·s$^{-1}$) required for carbon dioxide capture or conversion; providing a second composite membrane comprising a palladium membrane having said lattice parameters (in particular a palladium membrane without containing Au); carrying out the carbon dioxide capture or conversion in the presence of the provided second composite membrane. Preferably, the relationship between the hydrogen permeation and diffusion rate $J_{H2}$ and the lattice parameter k satisfies the following formula II:

$$J_{H2} = \frac{(n-1)! \times \left(\dfrac{M_a^{\,n}}{\sum\limits_{i=1}^{n} M_i}\right)^{\frac{1}{n}} \times \left(\dfrac{\sum\limits_{i=1}^{n} \rho_i}{\rho_a^{\,n}}\right)^{\frac{1}{n}}}{b \times 10^5 \times k \times d} \qquad \text{Formula II}$$

In the formula II, the unit of $J_{H2}$ is mol·m$^{-2}$·s$^{-1}$;

the unit of k is nm;
n denotes the number of kinds of metal contained in the palladium membrane;
$M_a$ denotes the average relative atomic mass of the n alloys, and the unit is g/mol;
$M_i$ denotes the relative atomic mass of the i$^{th}$ metal, and the unit is g/mol;
$\rho_a$ denotes the average density of the n$^{th}$ alloy, and the unit is kg/m$^3$;
$\rho_i$ denotes the density of the i$^{th}$ metal, and the unit is kg/m$^3$;
d denotes the thickness of said palladium membrane and the unit is m;
b denotes a correction coefficient and its value range is 0.5-3.

Preferably, when the material of the palladium membrane is PdCu alloy, the value range of b is 0.54-1.25.
Preferably, when the material of the palladium membrane is PdAg alloy, the value range of b is 0.61-1.68.
Preferably, when the palladium membrane is made of PdAu alloy, the value range of b is 0.7-3.
Preferably, when the material of the palladium membrane is PdCuAg alloy, the value range of b is 0.59-1.62.
Preferably, when the palladium membrane is made of PdCuAu alloy, the value range of b is 0.75-2.65.
Preferably, when the material of the palladium membrane is PdCuNi alloy, the value range of b is 0.51-1.22.
The hydrogen permeation and diffusion rates and lattice parameter values of palladium membranes for some palladium-based alloy materials are shown in below table, each of their relationships satisfies the formula II mentioned above:

Table 1

| Samples | Metal species in the alloy | Lattice parameter k | Thickness /μm | JH2 |
|---------|---------------------------|--------------------|--------------|-----|
| A1 | Pd and Cu | 0.2768 | 6 | 0.58 |
| A2 | Pd and Cu | 0.2784 | 7 | 0.56 |
| A3 | Pd and Cu | 0.28 | 8 | 0.57 |
| A4 | Pd and Cu | 0.2816 | 9 | 0.58 |
| A5 | Pd and Cu | 0.2832 | 6 | 0.55 |
| A6 | Pd and Cu | 0.2752 | 6 | 0.57 |
| AD1 | Pd and Cu | 0.336 | 6 | 0.46 |

(continued)

| Samples | Metal species in the alloy | Lattice parameter k | Thickness /$\mu$m | JH2 |
|---|---|---|---|---|
| AD2 | Pd and Cu | 0.323 | 6 | 0.47 |
| AD3 | Pd and Cu | 0.3319 | 6 | 0.45 |
| AD4 | Pd and Cu | 0.3054 | 6 | 0.49 |
| AD5 | Pd and Cu | 0.3888 | 6 | 0.41 |
| AD6 | Pd and Cu | 0.3406 | 6 | 0.44 |
| AD7 | Pd and Cu | 0.3495 | 6 | 0.43 |
| B1 | Pd and Ag | 0.4125 | 7.5 | 0.36 |
| B2 | Pd and Ag | 0.4051 | 7.8 | 0.35 |
| B3 | Pd and Ag | 0.4146 | 8 | 0.34 |
| B4 | Pd and Ag | 0.4016 | 8.5 | 0.36 |
| B5 | Pd and Ag | 0.4196 | 7.5 | 0.30 |
| B6 | Pd and Ag | 0.4073 | 7.5 | 0.33 |
| B7 | Pd and Ag | 0.4266 | 7.5 | 0.31 |
| BD1 | Pd and Ag | 0.4287 | 7.5 | 0.30 |
| BD2 | Pd and Ag | 0.4309 | 7.5 | 0.29 |
| BD3 | Pd and Ag | 0.4332 | 7.5 | 0.28 |
| C1 | Pd and Au | 0.4156 | 10 | 0.26 |
| C2 | Pd and Au | 0.4163 | 10 | 0.25 |
| C3 | Pd and Au | 0.4149 | 10 | 0.23 |
| C4 | Pd and Au | 0.4128 | 10 | 0.24 |
| C5 | Pd and Au | 0.4291 | 10 | 0.19 |
| C6 | Pd and Au | 0.4068 | 10 | 0.3 |
| C7 | Pd and Au | 0.4075 | 10 | 0.31 |
| C8 | Pd and Au | 0.4085 | 10 | 0.29 |
| C9 | Pd and Au | 0.4093 | 10 | 0.28 |
| CD1 | Pd and Au | 0.4316 | 10 | 0.18 |
| CD2 | Pd and Au | 0.4346 | 10 | 0.17 |
| CD3 | Pd and Au | 0.4337 | 10 | 0.16 |
| CD4 | Pd and Au | 0.4309 | 10 | 0.19 |
| CD5 | Pd and Au | 0.4426 | 10 | 0.12 |
| CD6 | Pd and Au | 0.4388 | 10 | 0.14 |
| CD7 | Pd and Au | 0.4321 | 10 | 0.15 |
| D1 | Pd, Cu, and Au | 0.4134 | 8 | 0.24 |
| D2 | Pd, Cu, and Au | 0.4158 | 10 | 0.24 |
| D3 | Pd, Cu, and Au | 0.417 | 9 | 0.23 |
| D5 | Pd, Cu, and Au | 0.4098 | 8 | 0.26 |
| D6 | Pd, Cu, and Au | 0.411 | 8 | 0.25 |
| D7 | Pd, Cu, and Au | 0.4122 | 8 | 0.25 |
| D8 | Pd, Cu, and Au | 0.423 | 8 | 0.21 |

(continued)

| Samples | Metal species in the alloy | Lattice parameter k | Thickness /$\mu$m | JH2 |
|---|---|---|---|---|
| D9 | Pd, Cu, and Au | 0.4206 | 8 | 0.22 |
| D10 | Pd, Cu, and Au | 0.4254 | 8 | 0.2 |
| D11 | Pd, Cu, and Au | 0.4146 | 8 | 0.22 |
| DD1 | Pd, Cu, and Au | 0.4337 | 8 | 0.17 |
| DD2 | Pd, Cu, and Au | 0.4327 | 8 | 0.18 |
| DD3 | Pd, Cu, and Au | 0.4307 | 8 | 0.19 |
| DD4 | Pd, Cu, and Au | 0.4186 | 8 | 0.25 |
| DD5 | Pd, Cu, and Au | 0.4501 | 8 | 0.15 |
| E1 | Pd, Cu, and Ag | 0.4072 | 10 | 0.33 |
| E2 | Pd, Cu, and Ag | 0.4158 | 8 | 0.32 |
| E3 | Pd, Cu, and Ag | 0.4101 | 9 | 0.34 |
| E4 | Pd, Cu, and Ag | 0.413 | 5 | 0.33 |
| E5 | Pd, Cu, and Ag | 0.4025 | 10 | 0.34 |
| E6 | Pd, Cu, and Ag | 0.4087 | 10 | 0.35 |
| E7 | Pd, Cu, and Ag | 0.4116 | 10 | 0.35 |
| E8 | Pd and Cu | 0.2915 | 10 | 0.53 |
| E9 | Pd, Cu, and Ni | 0.2781 | 10 | 0.51 |
| ED1 | Pd, Cu, and Ag | 0.4186 | 10 | 0.29 |
| ED2 | Pd, Cu, and Ag | 0.4172 | 10 | 0.3 |
| ED3 | Pd, Cu, and Ag | 0.4213 | 10 | 0.28 |
| ED4 | Pd, Cu, and Ag | 0.4144 | 10 | 0.31 |
| ED5 | Pd, Cu, and Ag | 0.4353 | 10 | 0.25 |
| ED6 | Pd, Cu, and Ag | 0.4409 | 10 | 0.26 |
| ED7 | Pd, Cu, and Ag | 0.4367 | 10 | 0.26 |
| ED8 | Pd, Cu, and Ag | 0.4521 | 10 | 0.22 |
| ED9 | Pd, Cu, and Ag | 0.4339 | 10 | 0.26 |
| F1 | Pd and Cu | 0.289 | 6 | 0.56 |
| F2 | Pd and Cu | 0.2905 | 7.5 | 0.55 |
| F3 | Pd and Cu | 0.2909 | 8 | 0.54 |
| FD1 | Pd and Cu | 0.299 | 6 | 0.5 |
| FD2 | Pd and Cu | 0.2981 | 6 | 0.51 |
| FD3 | Pd and Cu | 0.2996 | 6 | 0.49 |
| FD4 | Pd and Cu | 0.2955 | 6 | 0.52 |
| FD5 | Pd and Cu | 0.305 | 6 | 0.46 |
| FD6 | Pd and Cu | 0.3113 | 6 | 0.48 |
| FD7 | Pd and Cu | 0.3041 | 6 | 0.47 |
| FD8 | Pd and Cu | 0.4493 | 6 | 0.21 |
| FD9 | Pd and Cu | 0.4169 | 6 | 0.24 |
| G1 | Pd, Cu, and Ni | 0.2716 | 7.5 | 0.56 |

(continued)

| Samples | Metal species in the alloy | Lattice parameter k | Thickness /$\mu$m | JH2 |
|---|---|---|---|---|
| G2 | Pd, Cu, and Ni | 0.2729 | 8.5 | 0.55 |
| G3 | Pd, Cu, and Ni | 0.2755 | 8 | 0.55 |
| GD1 | Pd, Cu, and Ni | 0.2885 | 7.5 | 0.49 |
| GD2 | Pd, Cu, and Ni | 0.2833 | 7.5 | 0.51 |
| GD3 | Pd, Cu, and Ni | 0.2859 | 7.5 | 0.48 |
| GD4 | Pd, Cu, and Ni | 0.282 | 7.5 | 0.53 |
| GD5 | Pd, Cu, and Ni | 0.2963 | 7.5 | 0.44 |
| GD6 | Pd, Cu, and Ni | 0.2898 | 7.5 | 0.46 |
| GD7 | Pd, Cu, and Ni | 0.295 | 7.5 | 0.45 |
| GD8 | Pd, Cu, and Ni | 0.4568 | 7.5 | 0.2 |
| GD9 | Pd, Cu, and Ni | 0.4207 | 7.5 | 0.25 |

According to a preferred embodiment of the invention, the second composite membrane comprises a palladium membrane, and a silica-alumina molecular sieve loaded with sodium-modified nanometer $Fe_3O_4$ (i.e., sodium-modified nanometer $Fe_3O_4$ is loaded on the silica-alumina molecular sieve) attached on a surface of said palladium membrane. The thickness of the palladium membrane may be within the range of 0.5-30$\mu$m, preferably within the range of 5-15$\mu$m. The material of said palladium membrane may be palladium metal or palladium alloy, preferably the aforementioned composite palladium-based alloy material or the composite palladium-based alloy material E described below: the composite palladium-based alloy E comprises Pd, Cu, and Ag, and the molar ratio of Pd, Cu, and Ag is 100: (12-38): (9-25), the crystal structure of the composite palladium-based alloy material E is face-centered cubic close packing, and the lattice parameter k is within the range of 0.4025-4255nm.

According to the invention, preferably, the full width at half maximum of at least one characteristic peak for $2\theta$ within the range of 10°-90° in an XRD graph of the composite palladium-based alloy material E is less than or equal to 0.1633; more preferably, the full width at half maximum of all the characteristic peaks for $2\theta$ within the range of 10°-90° in an XRD graph of the composite palladium-based alloy material E is less than or equal to 0.1633; more preferably less than or equal to 0.084; or less than or equal to 0.078; or less than or equal to 0.072; or less than or equal to 0.069; or less than or equal to 0.064; or less than or equal to 0.055; or less than or equal to 0.039, it is usually more than or equal to 0.052; or more than or equal to 0.059; or more than or equal to 0.062; or more than or equal to 0.068; or more than or equal to 0.073; further preferably, in the XRD pattern of said composite palladium-based alloy material E, the full width at half maximum of the characteristic peak at $2\theta=40°\pm1°$ (i.e., the characteristic peak of a crystal plane (110)) is less than or equal to 0.0698, or less than or equal to 0.055; or the full width at half maximum of the characteristic peak at $2\theta=46°\pm1°$ (i.e., the characteristic peak of a crystal plane (111)) is less than or equal to 0.0873, or less than or equal to 0.069; or the full width at half maximum of the characteristic peak at $2\theta=69°\pm1°$ (i.e., the characteristic peak of a crystal plane (220)) is less than or equal to 0.1047, or less than or equal to 0.072; or the full width at half maximum of the characteristic peak at $2\theta=83°\pm1°$ (i.e., the characteristic peak of a crystal plane (311)) is less than or equal to 0.1396, or less than or equal to 0.078; or the full width at half maximum of the characteristic peak at $2\theta=87°\pm1°$ (i.e., the characteristic peak of a crystal plane (222)) is less than or equal to 0.1633, or less than or equal to 0.084.

Preferably, the second composite membrane is a tubular membrane.

Preferably, the second composite membrane may further comprise a support body, and the palladium membrane (composite palladium-based alloy material E) is attached to the support body, and the support body has a thickness within the range of 0.1-20mm, preferably within the range of 2-5 mm.

Preferably, the silica-alumina molecular sieve in the second composite membrane is at least one of HZSM-5, HZSM-11, HZSM-12, HZSM-23, HZSM-34, HY, HMCM-22, HBEA, and HMOR.

Preferably, the silica-alumina molecular sieves loaded with sodium-modified nanometer $Fe_3O_4$ have a thickness within the range of 100-3,750nm, and more preferably within the range of 350-1,500nm.

Preferably, the silica-alumina molecular sieve in the second composite membrane has a molar ratio of Si/Al within the range of (2-50): 1, more preferably within the range of (5-20): 1; an average particle diameter within the range of 50-420nm, more preferably within the range of 150-300nm; an average pore diameter within the range of 0.25-225nm, more preferably within the range of 0.75-35nm; a specific surface area within the range of 25-600m$^2$/g, more preferably within the range of 50-500m$^2$/g; a crystallinity larger than or equal to 92%, more preferably within the range of 96-99%.

Preferably, the sodium-modified nanometer $Fe_3O_4$ in the second composite membrane has an average particle diameter within the range of 5-300nm, more preferably within the range of 10-100 nm.

Preferably, the sodium-modified nanometer $Fe_3O_4$ in the second composite membrane is loaded in an amount such that a molar ratio of Pd/Fe is within the range of 1: (0.001-0.1), more preferably within the range of 1: (0.001-0.03).

Preferably, the sodium-modified nanometer $Fe_3O_4$ in the second composite membrane has a molar ratio of Na/Fe within the range of 1: (1-10), more preferably within the range of 1: (3-6).

According to the invention, the method for preparing the composite palladium-based alloy material E preferably comprises the following steps: depositing Pd, Cu, and Ag on a support body, then carrying out an alloying treatment on the support body deposited with Pd, Cu, and Ag, wherein the molar ratio of Pd/Cu/Ag is 100: (12-38): (9-25); the alloying treatment mode is as follows: in an activation atmosphere, initially performing a heat treatment under the conditions including a temperature of 500-650°C (e.g., 500°C, 540°C, 550°C, 560°C, 570°C, 580°C, 590°C, 600°C, or any value therebetween) and a pressure of greater than 0.1MPa, then lowering the temperature to 200°C or less at a cooling rate greater than 30°C/min (e.g., 31°C/min, 35°C/min, 40°C/min, 45°C/min, 55°C/min, 65°C/min, 70°C/min, 80°C/min, 100°C/min, or any value therebetween). The gas providing the activation atmosphere optionally includes an alkaline gas, as previously mentioned, the specific content will not be repeatedly described herein. More preferably, the alloying treatment is performed in the following mode: performing the alloying treatment at the temperature of 600-625°C and the pressure of 0.56-0.73MPa in an activation atmosphere for 1.5-7h; then lowering the temperature to 150-200°C at the cooling rate of 55-75°C/min.

The method for preparing the second composite membrane may comprise the following steps: (I) placing a palladium membrane or the aforementioned material (composite palladium-based alloy material E) following the alloying treatment in a solution containing a silicon-aluminum molecular sieve precursor, then performing hydrothermal crystallization, drying and roasting in sequence to obtain a composite membrane precursor;

(II) Loading (or depositing) sodium-modified nanometer $Fe_3O_4$ on the surface of the composite membrane precursor.

In the method for preparing the second composite membrane, the solution containing a silicon-aluminum molecular sieve precursor preferably comprises a silicon source, an aluminum source, a templating agent, and water.

In the method for preparing the second composite membrane, the molar ratio of the silicon source to the aluminum source to the templating agent to the water is preferably 100: (2-50): (15-65): (60-2,400), more preferably 100: (5-20): (20-50): (70-1,250).

In the method for preparing the second composite membrane, the used amount of the solution containing a silicon-aluminum molecular sieve precursor is preferably 0.025-0.085 ml relative to 1g of the palladium membrane or the material following the alloying treatment.

In the method for preparing the second composite membrane, the silicon source may be a commonly used substance in the art that can provide silicon element, the silicon source is preferably at least one of silicate ester, silicate, and silicon dioxide, and more preferably at least one selected from the group consisting of tetrabutyl orthosilicate, tetraethyl orthosilicate, sodium silicate, potassium silicate, silica sol, and water glass. The aluminum source may be a commonly used substance in the art that can provide aluminum element, the aluminum source is preferably at least one of metaaluminate, alumina, aluminum salt, aluminum sol, and organic aluminum alkoxide, and more preferably at least one selected from the group consisting of sodium metaaluminate, pseudo-boehmite, aluminum sulfate, aluminum nitrate and aluminum isopropoxide. Preferably, the templating agent is at least one of tetraalkylammonium hydroxide, alkylamine, and tetraalkylammonium halide, more preferably at least one selected from the group consisting of tetrabutylammonium hydroxide, tetrapropylammonium hydroxide, tetraethylammonium hydroxide, triethylamine, hexadecyltrimethylammonium bromide, and isopropylamine.

In the method for preparing the second composite membrane, preferably, the hydrothermal crystallization mode may be initially aging and then crystallizing. More preferably, the aging conditions include: the aging temperature being within the range of 70-90°C. More preferably, the aging conditions further comprise: the aging time is within the range of 6-10h. More preferably, the crystallization conditions include: the crystallization temperature being within the range of 160-190°C. More preferably, the crystallization conditions further include: the crystallization time being within the range of 24-48h, wherein the aging process may be carried out under the stirring condition, in a case of preferably, the stirring rate for the aging process is within the range of 800-1,000 rpm; wherein the crystallization process can also be carried out under the stirring conditions, and the stirring rate for crystallization process is preferably within the range of 15-30 rpm.

In the method for preparing the second composite membrane, the drying conditions are not particularly required, and preferably, the drying conditions comprise the drying temperature within the range of 50-80°C, and the drying time being within the range of 8-12h.

In the method for preparing the second composite membrane, preferably, the roasting conditions include: the roasting temperature being within the range of 575-625°C. Preferably, the roasting conditions further comprise: the roasting time is within the range of 4-6h.

In the method for preparing the second composite membrane, when the silicon source and/or the aluminum source (e.g., sodium silicate, potassium silicate, water glass, sodium metaaluminate) contains Na or K, the calcined product is a sodium-type molecular sieve, and therefore, in order to obtain a hydrogen type molecular sieve, it is preferable that the method further comprises: subjecting the calcined product to an ammonium exchange. The ammonium exchange may be carried out with the conventional methods, it will not be repeatedly described herein.

In the method for preparing the second composite membrane, the mode of depositing sodium-modified nanometer $Fe_3O_4$ on a surface of the composite membrane precursor is preferable as follows: impregnating a composite membrane precursor with a solution containing an iron source and a sodium source, and sequentially drying and calcining the impregnated composite membrane precursor, wherein the molar ratio of Na/Fe in the solution containing the iron source and the sodium source is 1: (1-10). More preferably, the concentration of Fe in the solution containing the iron source and the sodium source may be within the range of 0.01-0.86 mol/L. More preferably, the concentration of Na in the solution containing the iron source and the sodium source may be within the range of 0.01-0.55 mol/L. More preferably, the solution containing the iron source and the sodium source is used in an amount of 0.01-0.05 ml relative to 1g of the composite membrane precursor. Preferably, the iron source may be a substance capable of providing iron element commonly used in the art, more preferably, the iron source is at least one selected from iron salt and ferrous salt, and further preferably at least one of $FeCl_3$, $FeCl_2$, $Fe(NO_3)_3$, $FeSO_4$, $NH_4Fe(SO_4)_2$ and $(NH_4)_2Fe(SO_4)2$. According to a particularly preferred embodiment, the iron source is the mixture of a source (e.g., $FeCl_3$) of iron ions ($Fe^{3+}$) and a source (e.g., $FeCl_2$) of ferrous ions ($Fe^{2+}$) in a molar ratio of 1.5-2.5.

The sodium source may be a substance capable of providing sodium element commonly used in the art, and preferably, the sodium source is at least one selected from sodium hydroxide and sodium salt, more preferably at least one of NaOH, $NaHCO_3$, $Na_2CO_3$, and NaCl. More preferably, the pH of the solution containing the iron source and the sodium source may be within the range of 8-12, preferably within the range of 9-11. When NaOH is used as the sodium source, the NaOH is preferably contained in the solution in an amount such that the pH of the solution satisfies the above-mentioned range. More preferably, the impregnation conditions comprise: the impregnation temperature is within the range of 15-85°C, and more preferably within the range of 25-60°C; the impregnation time is within the range of 0.5-3.5h, more preferably within the range of 1-2h. More preferably, the calcination conditions comprise: the calcination temperature is within the range of 325-500°C, and the calcination time is within the range of 3-5h. More preferably, before impregnating the composite membrane precursor with the solution comprising the iron source and the sodium source, subjecting the solution comprising the iron source and the sodium source to an aging process, the aging conditions comprise: the temperature is within the range of 20-70°C, and the time is within the range of 0.5-3h.

The method for measuring the parameters such as full width at half maximum, lattice parameter, crystal structure, thickness, average particle diameter, average pore diameter, and specific surface area involved in the invention is described in the following test examples.

The invention will be described in detail below with reference to examples. In the following examples and comparative examples, the inner surface of the support body was sealed with a polytetrafluoroethylene material. Therefore, molecular sieves, nanoparticles, etc. had only been selectively loaded on the surface of porous support. The polytetrafluoroethylene material was peeled off before the use or performance test.

Examples A1-A4

(1) A porous stainless steel tube was used as a support body (tubular support body with an inner diameter of 10mm, an outer diameter of 13 mm; an average pore diameter of 0.25μm, and a porosity of 65%), the support body was initially soaked in absolute ethanol for 30min to remove dust, grease and other pollutants on surface; the surface and inner side of the carrier was washed with deionized water, and the support body was placed in warm water, subjected to vacuuming and washing with a vacuum pump to clean residual ethanol in the pore canal, and finally placed in an oven, and subjected to drying at 423K for 4h; pd and Au were deposited on the support body by adopting an electroplating method according to the Faraday's law, the molar ratio M of Pd/Au was shown in Table 2, and an effective membrane area was 25cm$^2$; wherein the electroplating mode was as follows: a conductive layer carrier was used as a working electrode, a platinum electrode (plated with Pd) and a ruthenium/titanium oxide composite electrode ($RuO_2/TiO_2$) (plated with Au) were used as counter electrodes, a saturated calomel electrode was used as a reference electrode respectively, the concentrations of metal ions ($Pd^{2+}$ and $Au^{3+}$) in the plating solution were within the range of 0.01-0.05mol/L under the temperature of 30°C, and a plating experiment was carried out by utilizing a cyclic voltammetry, wherein the working voltage interval was -0.60V to -0.90V, the scanning rate was 0.0075V/s, the scanning period was 1,000, and the sensitivity was set at 0.0001A/V. Meanwhile, during the electroplating process, a plunger-type constant flow pump was used for adding ammonium palladium chloride ($(NH_4)_2PdCl_4$) solution having a concentration of 0.05 mol/L at an injection rate of 1-2 ml/min, chloroauric acid ($HAuCl_4$) solution having a concentration of 0.01 mol/L at an injection rate of 0.5-1.5 ml/min, ethylenediamine (EDA, 99%, analytically pure) at an injection rate of 0.1 ml/min, ethylenediaminetetraacetic acid disodium salt (EDTA-2Na, 99%, analytically pure) at an injection rate of 0.05 ml/min, and adding bipyridyl ($C_{10}H_8N_2$, 99%, analytically pure) at an injection rate of 0.01 ml/min into the plating solution, respectively. The plating solution was kept vigorously stirred (1,000 r/min) during the process of adding the solutions. After each 30min of the electroplating process, the working electrode washed cleanly with distilled water was soaked in 0.05mol/L phosphoric acid ($H_3PO_4$) solution and 0.05mol/L dipotassium hydrogen phosphate ($K_2HPO_4$) solution for 10 min respectively. After the cyclic voltammetry process was finished, the working electrode was treated in distilled water at 95°C for 15min, and taken out. The support body deposited Pd and Au thereon was subjected to the high-temperature alloying treatment, wherein the alloying treatment mode was as follows: after treating under a temperature T1 and a pressure P in an activation atmosphere for a period of time (t); the temperature was reduced to a temperature T2 according to the cooling rate V; the gas providing the activation atmosphere included $H_2$ and $N_2$, and the volume ratio of $H_2$ to $N_2$ = R1, the gas providing the activation atmosphere was used in an amount such that the pressure of the alloying treatment was denoted as P, the various parameters were shown in Table 2.

(2) The material following the alloying treatment obtained in step (1) was placed in a solution of ZSM-5 molecular sieve precursor for carrying out a hydrothermal crystallization (aging and crystallization in sequence), drying and roasting, wherein the molar ratio of a silicon source to an aluminum source, a templating agent, and water was denoted as R2, the conditions of said steps were shown in Table 2, a composite membrane precursor was obtained; wherein in the solution of the ZSM-5 molecular sieve precursor, tetrapropylammonium hydroxide (TPAOH) was used as a templating agent, tetrabutyl orthosilicate (TEOS) was used as a silicon source, sodium metaaluminate was used as an aluminum source, and the solution of the silicon-aluminum molecular sieve precursor was used in an amount of 0.5 ml relative to 1g of the material following the alloying treatment.

(3) The surface of the composite membrane precursor was subjected to a silylation process by using a silylating reagent (Table 2) to obtain a composite membrane, wherein the silylation process included the following steps: the composite membrane was subjected to a silylation process for 45min by using a silylating reagent in a chemical vapor deposition furnace under the conditions such as certain temperature, pressure, vacuum degree, and an inert purge gas; the conditions of the silylation treatment were as follows: the temperature was 55°C, and the system pressure was kept at 25kPa (the atmospheric pressure was 101.325 kPa) by the action of a vacuum pump; the inert purge gas was $N_2$, and the flow rate was within the range of 35-75 ml/min; the silylating reagent was an analytically pure sample. Relative to 1g of the composite membrane precursor, 5ml of the silylating reagent was measured and placed in quartz boats located on both front and rear sides of the sample.

Example A5

The composite membrane was prepared according to the same method as that in Example A1, except that the molar ratio of Pd/Au was modified to 1: 1.

Example A6

The composite membrane was prepared according to the same method as that in Example A1, except that the molar ratio of Pd/Au was modified to 1: 0.2.

Example A7

The composite membrane was prepared according to the same method as that in Example A1, except that the gas providing the activation atmosphere was changed to hydrogen gas and ammonia in a volume ratio of 2.5:1, and the treatment time t =3h in the activation atmosphere.

Example A8

The composite membrane was prepared according to the same method as that in Example A2, except that the gas providing the activation atmosphere was changed to hydrogen gas and hydrazine in a volume ratio of 3:1, and the treatment time t =2.5h in the activation atmosphere.

Example A9

The composite membrane was prepared according to the same method as that in Example A3, except that the gas providing the activation atmosphere was changed to hydrogen gas and phosphine in a volume ratio of 3.5:1, and the treatment time t =2h in the activation atmosphere.

Example AD1

The composite membrane was prepared according to the same method as that in Example A1, except that the gas providing the activation atmosphere was only $N_2$.

Example AD2

The composite membrane was prepared according to the same method as that in Example A1, except that the gas providing the activation atmosphere was only $H_2$.

Example AD3

The composite membrane was prepared according to the same method as that in Example A1, except that the gas providing the activation atmosphere was only argon gas.

Example AD4

The composite membrane was prepared according to the same method as that in Example A1, except that the gas providing the activation atmosphere was a mixture of hydrogen gas and $CO_2$ (with a volume ratio of 1: 1).

Example A10

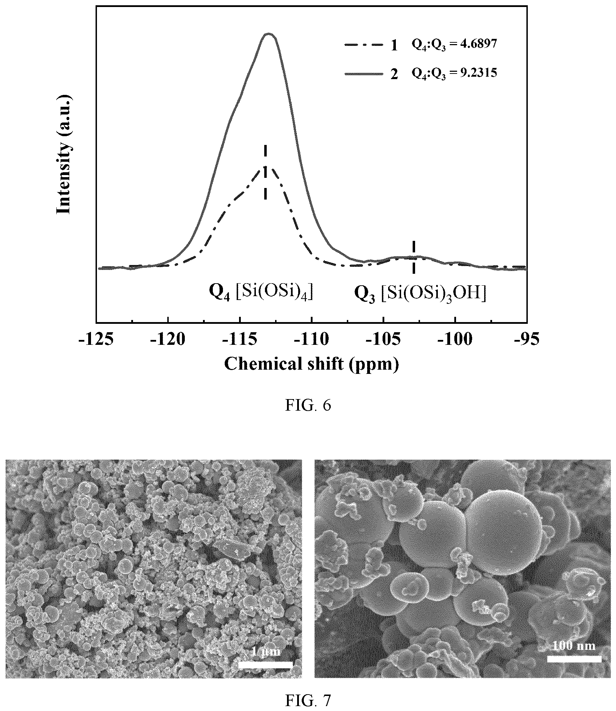

The composite membrane was prepared according to the same method as that in Example A7, except that the product obtained in step (3) was further subjected to a step of depositing molybdenum oxide, in particular, the resulting material following the silylation treatment was placed in a high-pressure hydrothermal synthesis kettle, a PTFE (polytetrafluoroethylene) material was used as an inner liner, a mixture of $(NH_4)_6Mo_7O_2 \cdot 4H_2O$, $(NH_4)_2CO_3$, $N_2H_4 \cdot H_2O$, LiOH was added, the molar ratio of said substances was 1:2:5:3, wherein the molar concentration of $(NH_4)_6Mo_7O_2 \cdot 4H_2O$ was 0.075mol/L, the ingredients were hydrothermally synthesized in a rotary oven under the temperature condition of 200°C for 36 hours so that the uniform $MoO_2$ nanoparticle layer was obtained on a surface of the material. The Scanning Electron Microscope (SEM) graphs of the resulting molybdenum oxide nanoparticles were shown in FIG. 7.

Example A11

The composite membrane was prepared according to the same method as that in Example A7, except that the product obtained in step (3) was further subjected to a step of depositing molybdenum oxide, in particular, the resulting material following the silylation treatment was placed in a high-pressure hydrothermal synthesis kettle, a PTFE (polytetrafluoroethylene) material was used as an inner liner, a mixture of $(NH_4)_6Mo_7O_2 \cdot 4H_2O$, $(NH_4)_2CO_3$, $N_2H_4 \cdot H_2O$, and LiOH was added, the molar ratio of said substances was 1:3:7.5:4.5, wherein the molar concentration of $(NH_4)_6Mo_7O_2 \cdot 4H_2O$ was 0.05mol/L, the ingredients were hydrothermally synthesized in a rotary oven under the temperature condition of 200°C for 36 hours so that the uniform $MoO_2$ nanoparticle layer was obtained on a surface of the material.

Example A12

The composite membrane was prepared according to the same method as that in Example A7, except that the product obtained in step (3) was further subjected to a step of depositing tungsten oxide, in particular, the resulting material following the silylation treatment was placed in a high-pressure hydrothermal synthesis kettle, a PTFE (polytetrafluoroethylene) material was used as an inner liner, a mixture of $Na_2WO_4 \cdot 2H_2O$, $H_2O$, and HCl was added, the molar ratio of said substances was 1:50:20, wherein the molar concentration of $Na_2WO_4 \cdot 2H_2O$ was 0.03mol/L, the mixture was vigorously stirred to form a homogeneous turbid liquid, the ingredients were hydrothermally synthesized in a rotary oven under the temperature condition of 180°C for 24 hours so that the uniform $WO_3$ nanoparticle layer was obtained on a surface of the material.

Example AD5

The composite membrane was prepared according to the same method as that in Example A1, except that the temperature was lowered to T2 at a cooling rate of V =5°C /min.

Example AD6

The composite membrane was prepared according to the same method as that in Example A1, except that the temperature of the alloying treatment was T1=700°C.

Example AD7

The composite membrane was prepared according to the same method as that in Example A1, except that the pressure of the alloying treatment was P =0.1 MPa.

Table 2

| | Conditions | A1 | A2 | A3 | A4 |
|---|---|---|---|---|---|
| Step (1) | T1/°C | 585 | 575 | 565 | 545 |
| | P/MPa | 0.23 | 0.21 | 0.20 | 0.12 |
| | R1 | 6.8:3.2 | 5.6:4.4 | 5:5 | 3.5:6.5 |
| | t/h | 5 | 5.5 | 6 | 4 |
| | V/(°C/min) | 35 | 40 | 30 | 60 |
| | T2/°C | 185 | 190 | 200 | 175 |
| | M | 75:25 | 73:27 | 77:23 | 72:28 |
| Step (2) | R2 | 100:10:35:1250 | 100:15:40:1200 | 100:20:45:1450 | 100:25:50:1500 |
| | Aging temperature/°C | 85 | 65 | 90 | 70 |
| | Aging time/h | 5 | 9 | 4 | 6 |
| | Aging rotational speed/rpm | 850 | 1200 | 650 | 900 |
| | Crystallization temperature/ °C | 165 | 170 | 175 | 180 |
| | Crystallization time/h | 48 | 36 | 24 | 18 |
| | Crystallization rotational speed/rpm | 25 | 20 | 30 | 15 |
| | Drying temperature/°C | 60 | 65 | 75 | 80 |
| | Drying time/h | 15 | 12 | 9 | 8 |
| | Calcination temperature/ °C | 575 | 550 | 600 | 625 |
| | Calcination time/h | 6 | 8 | 5 | 4 |
| Step (3) | Silylating reagent | Polymethylhydrosiloxane with an weight-average molecular weight of 1,700-3,200 | (3-mercaptopropyl) trimethoxy silane | 3-chloropropyl triethoxy silane | Polymethylhydrosiloxane with an weight-average molecular weight of 1,700-3,200 |

Examples E1-E4

(1) A porous stainless steel tube was used as a support body (tubular support body with an inner diameter of 10 mm, an outer diameter of 13 mm; an average pore diameter of 0.25μm, and a porosity of 65%), the support body was initially soaked in absolute ethanol for 30min to remove dust, grease and other pollutants on surface; the surface and inner side of the carrier was washed with deionized water, and the support body was placed in warm water, subjected to vacuuming and washing with a vacuum pump to clean residual ethanol in the pore canal, and finally placed in an oven, and subjected to drying at 423K for 4h; pd, Cu, and Ag were deposited on the support body by adopting an electroplating method according to the Faraday's law, the molar ratio M of Pd/Cu/Ag was shown in Table 3, and an effective membrane area was $50cm^2$; wherein the electroplating mode was as follows: a conductive layer carrier was used as a working electrode; a platinum electrode (plated with Pd), a waveguide tube (plated with Cu) with the copper content of 99.999%, and a silver electrode (plated with Ag) were used as counter electrodes; a saturated calomel electrode was used as a reference electrode respectively, the concentrations of metal ions ($Pd^{2+}$, $Cu^{2+}$ and $Ag^+$) in the plating solution were within the range of 0.01-0.1mol/L under the temperature of 30°C, and a plating experiment was carried out by utilizing a cyclic voltammetry, wherein the working voltage interval was -0.60V to -0.90V, the scanning rate was 0.0075V/s, the scanning period was 1,000, and the sensitivity was set at 0.0001A/V. Meanwhile, during the electroplating process, a plunger-type constant flow pump was used for adding ammonium palladium chloride (($NH_4$)$_2$$PdCl_4$) solution having a concentration of 0.05 mol/L at an injection rate of 1-2 ml/min, copper nitrate ($Cu(NO_3)_2$) solution having a concentration of 0.075 mol/L at an injection rate of 0.5-1.5 ml/min, silver nitrate ($AgNO_3$) solution having a concentration of 0.05 mol/L at an injection rate of 0.25-1 ml/min, ethylenediamine (EDA, 99%, analytically pure) at an injection rate of 0.1 ml/min, ethylenediaminetetraacetic acid disodium salt (EDTA-2Na, 99%, analytically pure) at an injection rate of 0.05ml/min, and adding bipyridyl ($C_{10}H_8N_2$, 99%, analytically pure) at an injection rate of 0.01ml/min into the plating solution, respectively. The plating solution was kept vigorously stirred (1,000 r/min) during the process of adding the solutions. After each 30min of the electroplating process, the working electrode washed cleanly with distilled water was soaked in 0.05mol/L phosphoric acid ($H_3PO_4$) solution and 0.05mol/L dipotassium hydrogen phosphate ($K_2HPO_4$) solution for 10 min respectively. After the cyclic voltammetry process was finished, the working electrodes were treated in distilled water at 95°C for 15min, and taken out. The support body deposited Pd, Cu and Ag thereon was subjected to the high-temperature alloying treatment, wherein the alloying treatment mode was as follows: after treating under a temperature T1 and a pressure P in an activation atmosphere for a period of time (t); the temperature was reduced to a temperature T2 according to the cooling rate V; the gas providing the activation atmosphere included $H_2$ and $N_2$, and the volume ratio of $H_2$ to $N_2$ = R1, the gas providing the activation atmosphere was used in an amount such that the pressure of the alloying treatment was denoted as P, the various parameters were shown in Table 3.

(2) The material following the alloying treatment obtained in step (1) was placed in a solution of ZSM-5 molecular sieve precursor for carrying out a hydrothermal crystallization (aging and crystallization in sequence), drying, roasting, and performing ammonium exchange by using ammonium nitrate ($NH_4NO_3$), wherein the molar ratio of a silicon source, an aluminum source, a templating agent, and water was denoted as R2, the conditions of said steps were shown in Table 3, a composite membrane precursor was obtained; wherein in the solution of the ZSM-5 molecular sieve precursor, tetrapropylammonium hydroxide (TPAOH) was used as a templating agent, tetrabutyl orthosilicate (TEOS) was used as a silicon source, sodium metaaluminate was used as an aluminum source, and the solution of the silicon-aluminum molecular sieve precursor was used in an amount of 0.25 ml relative to 1g of the material following the alloying treatment.

Wherein the concrete mode of ammonium exchange was as follows: ammonium nitrate solution ($NH_4NO_3$) having a concentration of 0.5mol/L was used as an ion exchanger, it was added in an amount according to 1.5 times the feeding amount of $Na^+$, and a roasting product to be exchanged was immersed into the ion exchanger, and stirred at the rotational speed of 50 r/min under the temperature of 80°C and normal pressure for 2 hours; and the sample following the ion exchange was dried in an oven at 100°C for 6 hours. The dried sample was immersed in the ion exchanger, and the above operations were repeated once.

(3) The sodium-modified nanometer $Fe_3O_4$ was deposited on a surface of the composite membrane precursor to obtain the composite membrane, wherein the step of depositing the sodium-modified nanometer $Fe_3O_4$ was as follows: the mixed solution of $FeCl_3$ and $FeCl_2$ was prepared by blending the raw materials $FeCl_3$•6$H_2O$ and $FeCl_2$•4$H_2O$ with the molar ratio of 2, the pH was adjusted by using 0.1mol/L NaOH to obtain a solution containing an iron source and a sodium source, the stirring rate was kept at 500 r/min, an impregnation liquid was obtained through an aging process, a composite membrane precursor was placed in the impregnation liquid for impregnation, the impregnated composite membrane precursor was then dried under the temperature of 25°C and the vacuum condition of 0.002MPa for 10 hours to remove water in a free state, the composite membrane precursor was then calcinated at 475°C for 5 hours to remove crystal water and the templating agent, wherein the molar ratio of Na/Fe in the solution containing the iron source and the sodium source was denoted as R3 (as shown in Table 3), the solution containing the iron source and the sodium source was used in an amount of 0.025ml relative to 1g of the composite membrane precursor.

Table 3

| | | Parameters | E1 | E2 | E3 | E4 |
|---|---|---|---|---|---|---|
| | | T1/°C | 625 | 615 | 605 | 600 |
| | | P/MPa | 0.72 | 0.68 | 0.62 | 0.56 |
| | | R1 | 5.8:4.2 | 4.6:5.4 | 3.9:6.1 | 6.5:3.5 |
| Step (1) | | t/h | 6 | 7 | 5 | 6.5 |
| | | V/(°C/min) | 75 | 70 | 65 | 55 |
| | | T2/°C | 150 | 170 | 180 | 200 |
| | | M | 100:32.8:23.4 | 100:20:20 | 100:12:25 | 100:35:10 |
| | | R2 | 100:10:25:750 | 100:15:40:1200 | 100:20:50:900 | 100:5:45:750 |
| | | Aging temperature/°C | 80 | 90 | 70 | 80 |
| | | Aging time/h | 8 | 6 | 10 | 9 |
| | | Aging rotational speed/rpm | 900 | 800 | 950 | 850 |
| | | Crystallization temperature/°C | 180 | 160 | 190 | 170 |
| Step (2) | | Crystallization time/h | 36 | 48 | 24 | 36 |
| | | Crystallization rotational speed/rpm | 25 | 20 | 28 | 23 |
| | | Drying temperature/°C | 75 | 50 | 80 | 60 |
| | | Drying time/h | 10 | 12 | 8 | 11 |
| | | Calcination temperature/°C | 600 | 625 | 575 | 610 |
| | | Calcination time/h | 5 | 4 | 6 | 5 |
| | | pH | 10.5 | 10 | 9.5 | 9 |
| | | Molar ratio of Fe/Na in solution | 3 | 2.1 | 1.6 | 2.3 |
| | | Aging temperature/°C | 50 | 45 | 55 | 40 |
| Step (3) | | Aging time/h | 2 | 2.5 | 1.5 | 3 |
| | | Impregnation temperature/°C | 30 | 25 | 35 | 40 |
| | | Impregnation time/h | 2 | 2 | 1.5 | 2 |

Example E5

The composite membrane was prepared according to the same method as that in Example E1, except that the gas providing the activation atmosphere was changed to hydrogen gas and ammonia in a volume ratio of 2.5:1, and the treatment time t =4h in the activation atmosphere.

Example E6

The composite membrane was prepared according to the same method as that in Example E1, except that the gas providing the activation atmosphere was changed to hydrogen gas and hydrazine in a volume ratio of 3:1, and the treatment time t =3.5h in the activation atmosphere.

Example E7

The composite membrane was prepared according to the same method as that in Example E1, except that the gas providing the activation atmosphere was changed to hydrogen gas and phosphine in a volume ratio of 3.5:1, and the treatment time t =1.5h in the activation atmosphere.

Example ED1

The composite membrane was prepared according to the same method as that in Example E1, except that the gas providing the activation atmosphere was only $N_2$.

Example ED2

The composite membrane was prepared according to the same method as that in Example E1, except that the gas providing the activation atmosphere was only $H_2$.

Example ED3

The composite membrane was prepared according to the same method as that in Example E1, except that the gas providing the activation atmosphere was only argon gas.

Example ED4

The composite membrane was prepared according to the same method as that in Example E1, except that the gas providing the activation atmosphere was a mixture of hydrogen gas and $CO_2$ (with a volume ratio of 1: 1).

Example ED5

The composite membrane was prepared according to the same method as that in Example E1, except that the temperature was lowered to T2 at a cooling rate of V =5°C /min.

Example ED6

The composite membrane was prepared according to the same method as that in Example E1, except that the temperature of the alloying treatment was T1=700°C.

Example ED7

The composite membrane was prepared according to the same method as that in Example E1, except that the pressure of the alloying treatment was P =0.1 MPa.

Example ED8

The composite membrane was prepared according to the same method as that in Example E1, except that the molar ratio M of Pd, Cu, and Ag atoms was M = 100: 500: 500.

Example ED9

The composite membrane was prepared according to the same method as that in Example E1, except that the molar ratio of Pd, Cu, and Ag atoms was M = 100: 0.5: 0.5.

Example E8

The composite membrane was prepared according to the same method as that in Example A7, except that the support body was deposited with Pd and Cu in a weight ratio of 1: 1.3.

Example E9

The composite membrane was prepared according to the same method as that in Example A7, except that the support body was deposited with Pd, Cu, and Ni in a weight ratio of 1: 1: 0.6.

Test Example

(I) The materials obtained after the alloying treatment in step (1) in each of the Examples and Comparative Examples (i.e., composite palladium-based alloy material) were characterized with the following characterization method, and the crystal structure parameters of the composite palladium-based alloy materials were shown in Tables 4-8.

The crystal structure analysis of the composite palladium-based alloy materials was implemented on an X' Pert PRO/PANalytical type automatic X-ray diffractometer manufactured by Philips Ltd. in the Netherlands, under the experimental conditions comprising Cu $K\alpha$ ray ($\lambda$ = 0.1543 nm), tube pressure of 40 kV, a current of 40 mA, and the scan range of diffraction angle $2\theta$ of 10-90°. The interplanar spacing of the samples was calculated using the Bragg equation:

$$d = \lambda \,/\, 2 \, \sin\theta$$

Where $\lambda$ denoted the wavelength corresponding to Cu $K\alpha$ ray, and $\theta$ denoted the angle of the diffraction peak.

The crystal structure of the composite palladium-based alloy material was tested in the European synchrotron Radiation Center (beam BM25A) in France and had a higher resolution, the synchrotron ray had a wavelength $\lambda$ = 0.0618886 nm or 0.077449 nm, a tube voltage of 10.0335 keV or 20.0335 keV, a sample of $10\times1\,mm^2$ was firstly placed in a quartz capillary tube with a diameter of 2 mm, both top and bottom ends of the reactor were sealed by the quartz, the quartz capillary tube was then installed on a rotatable sample stage (to ensure that the temperature was uniform and the ray irradiation area was larger), the testing temperature range is 298-473 K (provided by a hot air blower), the pressure range was $10^{-4}$-130 kPa, the test atmosphere was initially introduced hydrogen gas, which was vacuumized after treating for 30 min, helium gas was then introduced as a protective gas for measurement.

The test method of the lattice parameter of composite palladium-based alloy material included the following steps: in combination with the in-situ XRD test, the cell parameters (collectively expressed by three cell constants of a, b, c and three inter-edge intersection angles $\alpha$, $\beta$ and $\gamma$ of the crystal cell) of the palladium-based alloy material were obtained, and according to the formulae $d_1=a/(\alpha^2+\beta^2+\gamma^2)^{0.5}$, $d_2=b/(\alpha^2+\beta^2+\gamma^2)^{0.5}$, $d_3=c/(\alpha^2+\beta^2+\gamma^2)^{0.5}$, the corresponding inter-planar spacing ($d_1$ $d_2$ $d_3$) of characteristic crystal planes was obtained through conversion, for example, the PdAu alloy material obtained in the invention pertained to a face-centered cubic close packing (FCC) structure, its characteristic crystal planes included (110), (111), (220), (311), (222); meanwhile, a series of different characteristic crystal face ratios (measured intensities corresponding to different crystal faces) can be obtained according to the X-ray diffraction results, for example, in the PdAu alloy material obtained in the invention, the (110) crystal face was corresponding to a characteristic peak at $2\theta=40°\pm1°$, the (111) crystal face was corresponding to a characteristic peak at $2\theta=46°\pm1°$, the (220) crystal face was corresponding to a characteristic peak at $2\theta=69°\pm1°$, the (311) crystal face was corresponding to a characteristic peak at $2\theta=83°\pm1°$, and the (222) crystal face was corresponding to a characteristic peak at $2\theta=87°\pm1°$. The conversion was performed by using HighScorePlus analysis software and combining the peak intensities of the characteristic crystal faces to obtain the lattice parameter k of the corresponding material.

The test method of the thickness of the composite palladium-based alloy material comprised the following steps: the thickness of the alloy membrane was measured and determined according to the plotting scale corresponding to the magnification factor and the measurement result obtained from the Scanning Electron Microscope (model: JSM-7610F); the surface flatness of the resulting composite palladium-based alloy material can also be observed through the Scanning Electron Microscope, and the result indicated that the surface of the composite palladium-based alloy material prepared by the invention was flat, smooth and free from defects.

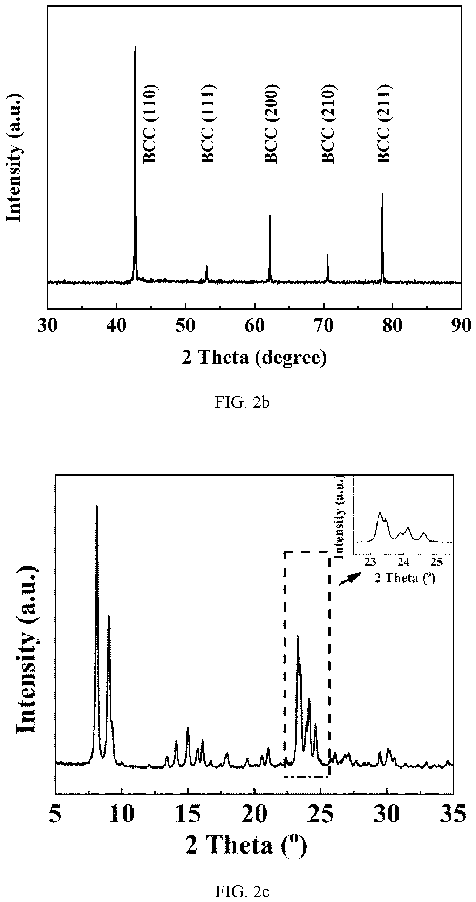

The full width at half maximum of the composite palladium-based alloy material was tested with the following method: the radian value of full width at half maximum of the sample was obtained according to the XRD spectrogram test result, in combination with the HighScore Plus software analysis, wherein the XRD spectrogram of the composite palladium-based alloy material obtained in Example A1 and Example E8 were shown in FIG. 2a and FIG. 2b, respectively.

(II) The composite membranes obtained in each of the Examples and Comparative Examples (the materials obtained before depositing the oxide) were taken and subjected to solid phase stripping treatment, so as to strip the molecular sieve for characterization, the characterization method was as follows, the relevant structural parameters of the molecular sieve attached on the surface of the composite palladium-based alloy material were obtained, as shown in Table 4 and Table 6.

The molecular sieve was tested by analyzing the samples with the Empyrean X-ray diffractometer manufactured by the Malvern-Panalytical Corporation under the following test conditions: Cu target, Ka radiation, Ni filter, tube voltage 40kV, tube current 40mA, a scintillation counter, a step size of 0.0131°, a scanning range of 5-35°, and a scanning speed of 2.5°/min. The results showed that the material was a ZSM-5 silica-alumina molecular sieve with a double ten-membered ring cross-pore structure (MFI structure) (FIG. 2c illustrated an XRD graph of the molecular sieve obtained in Example A1, wherein four characteristic peaks for $2\theta$ within the range of 23°-25° indicated that the material had the double ten-membered ring cross pore structure, which complied with the characteristics of the ZSM-5 silica-alumina molecular sieve, each of the XRD graphs of the molecular sieves in Examples was similar to that in FIG. 2c, it demonstrated that each of the obtained molecular sieves was the ZSM-5 silica-alumina molecular sieve);

The test method for specific surface area and average pore diameter of molecular sieves: the measurement was performed on the U.S. Micromeritics ASAP 2020 physical adsorption apparatus. The samples were treated under high vacuum at temperatures 363K and 573K for 1 h and 3 h, respectively, and adsorbed at a constant temperature of 77K using $N_2$ as an adsorbate. The BET specific surface area was obtained by combining an $N_2$ adsorption isotherm with a BET equation; the average pore diameter was measured by adopting a BJH method, and was calculated based on a desorption branch of an $N_2$ adsorption isotherm;

The test method for the crystallinity of the molecular sieves comprised the following steps: the crystallinity was measured by using a conventional X-ray diffractometer with a tube voltage of 40kV, a tube current of 40mA, and a scanning speed of 2.5°/min, the diffraction graphs of the samples were recorded for $2\theta$ within the range of 5-35°. The ZSM-5 sample with a product brand M196697 manufactured by the Shanghai Aladdin Biochemical Technology Co., Ltd. was a reference sample, its relative crystallinity was set as 100, the peak intensities of characteristic diffraction peaks for $2\theta$=7.96°, 8.83°, 23.18°, 23.99°, and 24.45° of each sample were summed, and the relative crystallinity of each sample was calculated by comparing the sum of the peak intensities of said sample with the sum of the peak intensities of the reference sample;

The test method for an average particle diameter of the molecular sieve comprises the following steps: the microscopic morphology of the molecular sieve in the sample was observed by using a transmission electron microscope, the diameter of the molecular sieve was measured according to the plotting scale, the corresponding particle diameter distribution was calculated by averaging a plurality of samples by using a mathematical statistics method;

The test method of the thickness of the molecular sieve was as follows: the thickness of the molecular sieve membrane was measured and determined according to the plotting scale corresponding to the magnification factor and the measurement result obtained from the Scanning Electron Microscope;

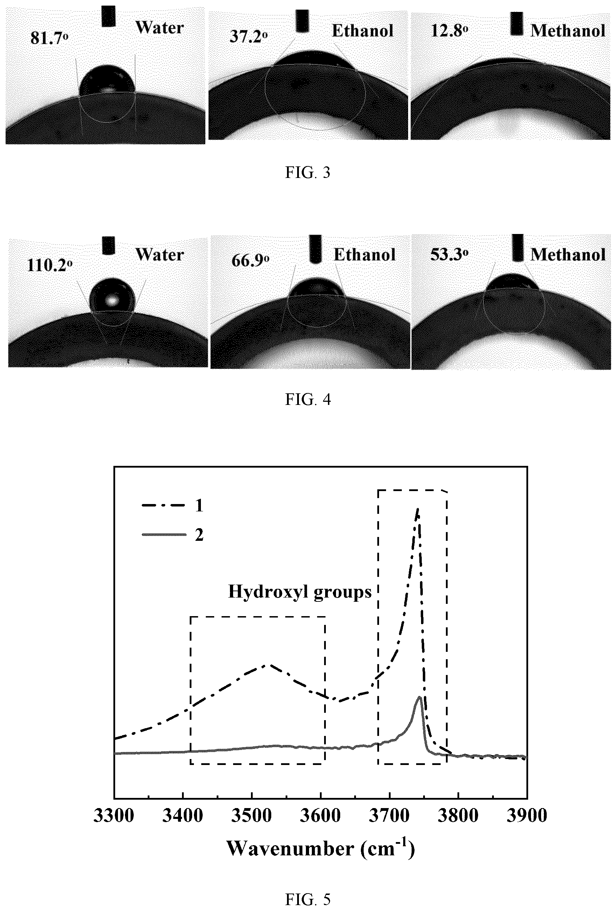

The method for testing the infrared hydroxyl of the molecular sieve comprised the following steps: The Fourier transform infrared spectra of the samples were recorded on Bruker-INVENIO R and Tensor 27 infrared spectrometer against the background KBr. The samples were placed in a flow cell and vacuumized at 823K for 2 hours, and the hydroxyl content in the range was determined by the summation of 32 scans at wavenumbers of 4000-650 cm$^{-1}$. The peak near wavenumber 3,500 cm$^{-1}$ in the corresponding spectrogram represented the relative content of the nest hydroxyl groups in the molecular sieve, and the peak near wavenumber 3,750 cm$^{-1}$ represented the relative content of the terminal hydroxyl groups of the molecular sieve. The degree of decrease in the total amount of hydroxyl groups before and after the hydrophobic treatment can be determined from the change in the peak area. The larger the peak area of the corresponding position is, the higher the hydroxyl content is, the hydrophobic property of the membrane material can be qualitatively expressed (in Example A1, the infrared characterization results of the hydroxyl groups before and after the silylating reagent treatment was shown in FIG. 5 (the dotted line showed the hydrophobic property before the hydrophobic treatment, and the solid line showed the hydrophobic property after the hydrophobic treatment), and the peak areas around wavenumber 3,500 cm$^{-1}$ and wavenumber 3,750 cm$^{-1}$ after the hydrophobic treatment were obviously reduced, which indicated that according to the hydrophobic treatment method of the invention, the number of the hydroxyl groups on the surface of the membrane material can be effectively reduced, and the hydrophobicity of the membrane material can be improved). The infrared characterization results of the hydroxyl groups before and after the treatment with the silylating reagent in each Example were similar to those of FIG. 5.

The test method of silicon nuclear magnetism of the molecular sieve comprised the following steps: $^{29}$Si MAS nuclear magnetic resonance (NMR) spectroscopy measurements were performed on the VARIAN VNMRS 400WB nuclear magnetic resonance spectrometer using a single pulse method with $(CH_3)_3Si(CH_2)_3SO_3Na$ as the chemical shift reference, a rotation rate of 3kHz and a cyclic delay of 60s at a frequency of 79.43MHz. The peaks with chemical shifts near-113ppm and -103ppm in the corresponding spectrogram represented the relative content of the molecular sieve silicon framework structure $Q_4$: $Si(OSi)_4$ and $Q_3$: $Si(OSi)_3OH$, and the ratio Q4/Q3 represented the relative content of silicon hydroxyl groups on the molecular sieve. The higher the ratio $Q_4/Q_3$, it represented that the less the number of silicon hydroxyl groups, the better the hydrophobicity of said material, for details, see the corresponding numerical values of "silicon hydroxyl groups $(Q_4/Q_3)$" in Table 4. The degree of decrease of the relative content of the silicon hydroxyl groups can be determined according to the change of the ratio before and after the hydrophobic treatment (the NMR characterization results before and after the treatment with a silylating reagent in Example A1 were shown in FIG. 6 (the dotted line showed the hydrophobic property before the hydrophobic treatment, and the solid line showed the hydrophobic property after the hydrophobic treatment), the ratio $Q_4/Q_3$ was increased after the hydrophobic treatment, which indicated that the hydrophobic treatment method of the invention can effectively reduce the number of the silicon hydroxyl groups on the surface of the membrane material and improve the hydrophobicity of the membrane material).

(III) Overall testing of the composite membrane

The obtained composite membrane was subjected to the liquid contact angle test, wherein the specific method comprised the following steps: the different liquids were taken as media on a data physics Contact Angle System OCA 25 instrument, the contact states of the different liquids with the composite membrane were captured through a built-in high-speed camera of the instrument, and the contact angle information was obtained after processing with the built-in software; wherein FIG. 3 was an experimental graph showing the contact angle of the composite membrane in Example 1A with different liquids before the hydrophobic treatment, and FIG. 4 was an experimental graph showing the contact angle of the composite membrane with different liquids after the hydrophobic treatment, respectively.

The test method of $E_{act}$ (hydrogen permeation activation energy, unit: $kJ \cdot mol^{-1}$) comprised the following steps: the hydrogen permeation amounts from the temperature 573K to 773K at a trans-membrane pressure difference of 0.1MPa was measured, in combination with the calculation according to the Arrhenius equation $J_{H2}=J_{H2}°exp(-E_{act}/RT)$, wherein $J_{H2}$ denoted the hydrogen permeation and diffusion rate, $J_{H2}°$ denoted the hydrogen permeation and diffusion coefficient, R denoted the gas constant, and T denoted the absolute temperature. The higher the hydrogen permeation activation energy, it indicated the higher the hydrogen mass transfer resistance of the composite membrane material, and the more difficult it is to permeate and diffuse hydrogen gas through the composite membrane. The measurement method of $J_{H2}$ (hydrogen permeation and diffusion rate, unit: $mol \cdot m^{-2} \cdot s^{-1}$) was performed by measuring the volume of hydrogen gas (liter) passing through a palladium-based composite membrane per minute at 20°C under a trans-membrane pressure difference of 0.1MPa and then normalizing to the hydrogen permeation amount ($mol \cdot m^{-2} \cdot s^{-1}$) in terms of the membrane area ($m^2$). The measurement method of $J_{N2}$ (nitrogen permeation and diffusion rate, unit: $mmol \cdot m^{-2} \cdot s^{-1}$) was implemented by measuring a volume of nitrogen gas (ml) passing through a palladium-based composite membrane per minute at 20°C under a trans-membrane pressure difference of 0.1MPa and then normalizing to the hydrogen permeation amount ($mol \cdot m^{-2} \cdot s^{-1}$) in terms of the membrane area ($m^2$).

Since the kinetic diameter of hydrogen gas was smaller than the average pore size of molecular sieve membranes, the parameters $E_{act}$, $J_{H2}$, and $J_{N2}$ of said composite membrane were equivalent to $E_{act}$, $J_{H2}$, and $J_{N2}$ of the composite palladium-based alloy material.

The elemental composition of the composite membrane was analyzed through the X-ray fluorescence (XRF) method in combination with an inductively coupled plasma optical emission spectroscopy (ICP-OES) analysis, and the valence state of the element was determined in combination with the X-ray photoelectron spectroscopy (XPS) analysis.

The morphology of the oxide nanoparticles was observed with a scanning electron microscope (SEM), and an average particle diameter was calculated.

The test results were shown in Tables 4-8.

Table 4

| | Parameters | | A1 | A2 | A3 | A4 | A5 | A6 | A7 | A8 | A9 |
|---|---|---|---|---|---|---|---|---|---|---|---|---|
| Composite palladium-based alloy material | Lattice parameter k | | 0.4156 | 0.4163 | 0.4149 | 0.4128 | 0.4291 | 0.4068 | 0.4075 | 0.4085 | 0.4093 |
| | Crystal structure | | FCC | FCC | FCC | FCC | FCC | FCC | FCC | FCC | FCC |
| | Thickness/μm | | 10 | 10 | 10 | 10 | - | - | - | - | - |
| | Full width at half maximum corresponding to the characteristic crystal plane | (110) | 0.0333 | 0.0379 | 0.0402 | 0.0426 | 0.0555 | 0.0426 | 0.0170 | 0.0187 | 0.0196 |
| | | (111) | 0.0357 | 0.0402 | 0.0433 | 0.0481 | 0.0699 | 0.0510 | 0.0175 | 0.0203 | 0.0331 |
| | | (220) | 0.0460 | 0.0502 | 0.0529 | 0.0557 | 0.0716 | 0.0572 | 0.0297 | 0.0320 | 0.0351 |
| | | (311) | 0.0536 | 0.0561 | 0.0596 | 0.0603 | 0.0859 | 0.0667 | 0.0312 | 0.0335 | 0.0389 |
| | | (222) | 0.0564 | 0.0585 | 0.0629 | 0.0643 | 0.0891 | 0.0701 | 0.0324 | 0.0357 | 0.0401 |
| Molecular sieve | Average particle diameter of molecular sieve/nm | | 170±6 | 160±5 | 175±7 | 180±8 | - | - | - | - | - |
| | Average pore diameter/nm | | 7.2±0.5 | 6.6±0.3 | 7.5±0.6 | 7.6±0.6 | - | - | - | - | - |
| | Specific surface area /m²/g | | 467±21 | 438±19 | 459±20 | 461±21 | - | - | - | - | - |
| | Crystallinity /% | | 97 | 96 | 97 | 96 | - | - | - | - | - |
| | Thickness/μm | | 12 | 11 | 10 | 12 | - | - | - | - | - |
| | $Q_4/Q_3$ | | 9.23 | 8.96 | 8.89 | 8.83 | - | - | - | - | - |
| Composite membrane as a whole | Water contact angle/° | | 110.2 | 106.6 | 105.3 | 107.7 | - | - | - | - | - |
| | Ethanol contact angle /° | | 66.9 | 59.7 | 57.8 | 59.6 | - | - | - | - | - |
| | Methanol contact angle/° | | 53.3 | 50.6 | 49.9 | 51.3 | - | - | - | - | - |
| | $E_{act}$ | | 12.3 | 12.6 | 12.8 | 13 | 14.6 | 14.9 | 11.8 | 12 | 12.1 |
| | $J_{H2}$ | | 0.26 | 0.25 | 0.23 | 0.24 | 0.19 | 0.3 | 0.31 | 0.29 | 0.28 |
| | $J_{N2}$ | | 0.0295 | 0.0286 | 0.0269 | 0.0291 | 0.271 | 0.0372 | 0.0271 | 0.0269 | 0.0266 |

Table 5

| | Parameters | | A10 | A11 | A12 | AD1 | AD2 | AD3 | AD4 | AD5 | AD6 | AD7 |
|---|---|---|---|---|---|---|---|---|---|---|---|---|
| Composite palladium-based alloy material | Lattice parameter k | | - | - | - | 0.4316 | 0.4346 | 0.4337 | 0.4309 | 0.4426 | 0.4388 | 0.4321 |
| | Crystal structure | | - | - | - | FCC | FCC | FCC | FCC | FCC | FCC | FCC |
| | Full width at half maximum corresponding to the characteristic crystal plane | (110) | - | - | - | 0.0501 | 0.0477 | 0.0527 | 0.0456 | 0.0706 | 0.0601 | 0.0656 |
| | | (111) | - | - | - | 0.0652 | 0.0609 | 0.0686 | 0.0551 | 0.0792 | 0.0715 | 0.0763 |
| | | (220) | - | - | - | 0.0642 | 0.0634 | 0.0700 | 0.0588 | 0.0869 | 0.0739 | 0.0828 |
| | | (311) | - | - | - | 0.0776 | 0.0729 | 0.0833 | 0.0698 | 0.1113 | 0.0903 | 0.1083 |
| | | (222) | - | - | - | 0.0812 | 0.0797 | 0.0869 | 0.0726 | 0.1257 | 0.0997 | 0.1134 |
| Oxide | Average particle diameter /nm | | 150 | 100 | 200 | - | - | - | - | - | - | - |
| | Molar ratio of Mo/W to Pd | | 0.05 | 0.03 | 0.05 | - | - | - | - | - | - | - |
| | Existence form of molybdenum/tungsten | | $MoO_2$ | $MoO_2$ | $WO_3$ | - | - | - | - | - | - | - |
| Composite membrane as a whole | Water contact angle/° | | 95.1 | 98.7 | 92.9 | - | - | - | - | - | - | - |
| | Ethanol contact angle /° | | 50.3 | 51.2 | 49.4 | - | - | - | - | - | - | - |
| | Methanol contact angle/° | | 32.1 | 33.8 | 30.5 | - | - | - | - | - | - | - |
| | $E_{act}$ | | 12.2 | 11.9 | 12.8 | 15.3 | 15.9 | 15.7 | 15.2 | 16.6 | 16.1 | 15.5 |
| | $J_{H2}$ | | 0.21 | 0.23 | 0.19 | 0.18 | 0.17 | 0.16 | 0.19 | 0.12 | 0.14 | 0.15 |
| | $J_{N2}$ | | 0.0215 | 0.0235 | 0.020 | 0.0239 | 0.0222 | 0.0215 | 0.0245 | 0.0214 | 0.0231 | 0.0256 |

Table 6

| | Parameters | | E1 | E2 | E3 | E4 | E5 | E6 | E7 |
|---|---|---|---|---|---|---|---|---|---|
| Composite palladium-based alloy material | Lattice parameter k | | 0.4072 | 0.4158 | 0.4101 | 0.4130 | 0.4025 | 0.4087 | 0.4116 |
| | Crystal structure | | FCC | FCC | FCC | FCC | FCC | FCC | FCC |
| | Thickness /$\mu$m | | 10 | 8 | 9 | 5 | - | - | - |
| | Full width at half maximum corresponding to the characteristic crystal plane | (110) | 0.0579 | 0.0633 | 0.0663 | 0.0695 | 0.0524 | 0.0528 | 0.0547 |
| | | (111) | 0.0691 | 0.0725 | 0.0785 | 0.0802 | 0.0599 | 0.0653 | 0.0687 |
| | | (220) | 0.0723 | 0.0776 | 0.0827 | 0.0843 | 0.0621 | 0.0681 | 0.0711 |
| | | (311) | 0.0762 | 0.0797 | 0.0861 | 0.0881 | 0.0686 | 0.0723 | 0.0776 |
| | | (222) | 0.0869 | 0.0953 | 0.1024 | 0.1098 | 0.0734 | 0.0801 | 0.0835 |
| HZSM-5 molecular sieve | Average particle diameter of molecular sieve/nm | | 225±12 | 250±14 | 280±16 | 210±11 | - | - | - |
| | Average pore diameter/nm | | 8.8±0.6 | 25.8±1.9 | 31.6±2.4 | 15.6±0.9 | - | - | - |
| | Specific surface area /m$^2$/g | | 340±20 | 220±13 | 185±10 | 290±18 | - | - | - |
| | Crystallinity /% | | 97 | 96 | 96 | 96 | - | - | - |
| A molecular sieve loaded with Na-Fe$_3$O$_4$ nano-particle | Thickness/nm | | 1200 | 800 | 750 | 1500 | - | - | - |
| | Particle diameter of Na-Fe$_3$O$_4$ nanoparticles/nm | | 75 | 80 | 90 | 85 | - | - | - |
| | The molar ratio of Pd/Fe | | 1:0.001 | 1:0.015 | 1:0.025 | 1:0.03 | - | - | - |
| | The molar ratio of Na/Fe | | 1:5.5 | 1:4.5 | 1:5 | 1:3.5 | - | - | - |
| Composite membrane as a whole | $E_{act}$ | | 12.5 | 12.8 | 12.6 | 13.0 | 11.8 | 12.0 | 11.9 |
| | $J_{H2}$ | | 0.33 | 0.32 | 0.34 | 0.33 | 0.34 | 0.35 | 0.35 |
| | $J_{N2}$ | | 0.031 | 0.033 | 0.033 | 0.032 | 0.028 | 0.029 | 0.030 |

Table 7

| | Parameters | | ED1 | ED2 | ED3 | ED4 | ED5 | ED6 | ED7 | ED8 | ED9 |
|---|---|---|---|---|---|---|---|---|---|---|---|---|
| Composite palladium-based alloy material | Lattice parameter k | | 0.4186 | 0.4172 | 0.4213 | 0.4144 | 0.4353 | 0.4409 | 0.4367 | 0.4521 | 0.4339 |
| | Crystal structure | | FCC | FCC | FCC | FCC | FCC | FCC | FCC | FCC | FCC |
| | Full width at half maximum corresponding to the characteristic crystal plane | (110) | 0.0811 | 0.0795 | 0.0839 | 0.0732 | 0.1066 | 0.0923 | 0.0881 | 0.1256 | 0.1122 |
| | | (111) | 0.1046 | 0.0920 | 0.1087 | 0.0882 | 0.1289 | 0.1236 | 0.1156 | 0.1361 | 0.1314 |
| | | (220) | 0.1099 | 0.0973 | 0.1123 | 0.0926 | 0.1433 | 0.1384 | 0.1355 | 0.1520 | 0.1488 |
| | | (311) | 0.1231 | 0.1085 | 0.1289 | 0.1026 | 0.1476 | 0.1405 | 0.1399 | 0.1562 | 0.1508 |
| | | (222) | 0.1235 | 0.1199 | 0.1346 | 0.1162 | 0.1511 | 0.1482 | 0.1416 | 0.1632 | 0.1588 |
| Composite membrane as a whole | $E_{act}$ | | 13.6 | 13.1 | 13.4 | 13.2 | 13.5 | 13.8 | 13.7 | 15.9 | 14.1 |
| | $J_{H2}$ | | 0.29 | 0.30 | 0.28 | 0.31 | 0.25 | 0.26 | 0.26 | 0.22 | 0.26 |
| | $J_{N2}$ | | 0.034 | 0.032 | 0.033 | 0.034 | 0.037 | 0.037 | 0.038 | 0.041 | 0.042 |

Table 8

| | Parameters | | E8 | E9 |
|---|---|---|---|---|
| Composite palladium-based alloy material | Lattice parameter k | | 0.2915 | 0.2781 |
| | Crystal structure | | BCC | BCC |
| | Full width at half maximum correspondin g to the characteristic crystal plane | (110) | 0.0401 | 0.0278 |
| | | (111) | 0.0425 | 0.0376 |
| | | (200) | 0.0652 | 0.0435 |
| | | (210) | 0.0679 | 0.0586 |
| | | (211) | 0.0734 | 0.0643 |
| Composite membrane as a whole | $E_{act}$ | | 10.2 | 11.0 |
| | $J_{H2}$ | | 0.53 | 0.51 |
| | $J_{N2}$ | | 0.041 | 0.042 |

(IV) Application testing

The properties of the composite membranes prepared in the aforementioned Examples and Comparative Examples in hydrogen production via reforming were tested.

(a) The prepared composite membrane (tubular membrane) containing Pd and Au and the steam reforming catalyst $CuO/ZnO/Al_2O_3$ (molar ratio of Cu, Zn, and Al was 1: 1: 0.23) were jointly encapsulated in a membrane reactor, the steam reforming catalyst was filled in the tubular membrane with a packing amount of 5ml, see FIG. 8, after encapsulating with a stainless steel closure head providing with a graphite sealing gasket 5, the membrane reactor was packed in a cylindrical stainless steel reactor 6 (for details, see FIG. 8) having a length of 500mm and an inner diameter of 45 mm; the feed gas (feed) consisting of $CH_3OH$ and steam in a molar ratio of $CH_3OH$: $H_2O$ = 1: 4 was introduced under the conditions such as a temperature of 320°C, a pressure of 0.35MPa and an gaseous hourly space velocity of 10,000 $h^{-1}$ to carry out the hydrogen production reaction via reforming. The detection of the product and the tail gas was as follows: the hydrogen product (permeate) on the permeate side was subjected to an on-line analysis by adopting the SCION-456 gas chromatography manufactured by the Shanghai Techcomp Scientific Instrument Co., Ltd. equipped with the Flame Ionization Detector (FID) and the Pulse Discharge Helium Ionization Detector (PDHID), the product distribution and the hydrogen purity change were monitored in real time; the retentate side tail gas component (retentate) was subjected to an on-line analysis by using the SCION-456 gas chromatography manufactured by the Shanghai Techcomp Scientific Instrument Co., Ltd. equipped with the Thermal Conductivity Detector (TCD) and FID; the methanol conversion rate, the hydrogen gas selectivity, and the hydrogen gas recovery rate were calculated and based on the detection results; the product was tested for each time interval of 5h; the continuous operation time when the methanol conversion rate was decreased to 90% of the initial value was recorded as the continuous operation time, both the "initial values of reaction" and the "experimental measurement values after reaching the continuous operation time" were shown in Table 9. The molar quantity of hydrogen gas generated by the reaction was the sum of the molar quantities of hydrogen gas on the retentate side and the permeate side; the calculation formulas of the methanol conversion rate, the hydrogen gas selectivity and the hydrogen gas recovery rate were defined respectively as follows:

Methanol conversion rate ($C_{CH3OH}$) = (molar quantity of carbon dioxide + molar quantity of carbon monoxide) / molar quantity of methanol introduced into the reactor.

Hydrogen gas selectivity ($S_{H2}$) = molar quantity of hydrogen gas produced by reaction / (molar quantity of hydrogen gas produced by reaction + molar quantity of carbon monoxide produced by reaction).

Hydrogen gas recovery rate ($R_{H2}$) = molar quantity of hydrogen gas permeated through the permeate side / molar quantity of hydrogen generated by the reaction.

The hydrogen-nitrogen selectivity ($\alpha(H_2/N_2)$) referred to the ratio of the hydrogen gas permeation and diffusion rate of the palladium membrane at the defect relative to the nitrogen gas permeation and diffusion rate at the defect, the larger value indicated that the palladium membrane had a higher mechanical structure stability, and the composite membrane material had fewer defects. Specifically, the hydrogen gas permeation and diffusion rate ($J_{H2}$) of the palladium membrane and the nitrogen gas permeation and diffusion rate ($J_{N2}$) at the defect under the same conditions (the temperature of 573K, trans-membrane pressure difference of 0.5MPa) were respectively measured; the hydrogen-nitrogen selectivity was calculated according to the formula $\alpha(H_2/N_2) = J_{H2}/J_{N2}$, in combination with the aforementioned measurement methods.

The test method for the carbon deposition amount was a thermogravimetric analysis method, wherein the temperature of a sample to be tested was increased from room temperature to 800°C at the temperature rise rate of 5°C per minute in an air atmosphere, and the content of carbon deposition was obtained according to the mass change of the sample before and after the reaction.

Table 9

| | Initial values of reaction | | | Continuous operation time of composite membrane/h | Experimental measurement values after reaching the continuous operation time | | | |
|---|---|---|---|---|---|---|---|---|
| | $C_{CH3OH}$/% | $S_{H2}$/% | $R_{H2}$/% | | $S_{H2}$/% | $R_{H2}$/% | $\alpha(H_2/N_2)$ | Carbon deposition (weight%) |
| A1 | 86.6 | 96.1 | 99.5 | 765 | 94.3 | 99.1 | 8378 | 0.57 |
| A2 | 86.2 | 95.7 | 99.3 | 760 | 93.4 | 98.8 | 8310 | 0.62 |
| A3 | 85.9 | 95.3 | 99.3 | 755 | 93.3 | 98.7 | 8039 | 0.63 |
| A4 | 85.7 | 95.0 | 99.2 | 750 | 93.1 | 98.5 | 7869 | 0.66 |
| A5 | 80.9 | 91.7 | 96.0 | 680 | 88.5 | 95.6 | 6738 | 1.23 |
| A6 | 84.9 | 94.5 | 98.8 | 735 | 92.7 | 98.1 | 7791 | 0.73 |
| A7 | 89.9 | 98.6 | 99.9 | 800 | 95.6 | 99.6 | 10868 | 0.32 |
| A8 | 89.2 | 98.1 | 99.8 | 795 | 95.0 | 99.5 | 10359 | 0.38 |
| A9 | 88.6 | 97.8 | 99.7 | 790 | 94.9 | 99.3 | 10105 | 0.43 |
| A10 | 88.5 | 97.6 | 99.7 | 785 | 94.7 | 99.3 | 9538 | 0.46 |
| A11 | 88.3 | 97.5 | 99.7 | 780 | 94.6 | 99.3 | 9527 | 0.49 |
| A12 | 88.0 | 97.2 | 99.5 | 775 | 94.3 | 99.0 | 9246 | 0.52 |
| AD1 | 81.8 | 92.5 | 96.9 | 710 | 89.1 | 96.3 | 7258 | 0.93 |
| AD2 | 82.2 | 93.0 | 97.3 | 715 | 89.8 | 96.8 | 7295 | 0.89 |
| AD3 | 81.6 | 92.2 | 96.5 | 705 | 88.7 | 96.0 | 7173 | 0.97 |
| AD4 | 82.5 | 93.2 | 97.6 | 720 | 90.1 | 97.1 | 7369 | 0.86 |
| AD5 | 79.6 | 90.7 | 94.6 | 640 | 87.7 | 94.5 | 5420 | 1.79 |
| AD6 | 80.3 | 91.2 | 95.5 | 660 | 88.2 | 95.0 | 5806 | 1.56 |
| AD7 | 80.0 | 91.0 | 95.0 | 650 | 87.9 | 94.8 | 5673 | 1.68 |
| E8 | 88.2 | 97.3 | 99.6 | 765 | 94.3 | 99.2 | 10561 | 0.50 |
| E9 | 88.1 | 97.0 | 99.5 | 760 | 94.1 | 99.1 | 9974 | 0.52 |

(b) The hydrogen production via steam reforming was performed in the same manner in step (a), except that the feed gas was doped with 50ppm of hydrogen sulfide ($H_2S$), the results were shown in Table 10.

Table 10

| | Initial values of reaction | | | Continuous operation time of composite membrane/ h | Experimental measurement values after reaching the continuous operation time | | | | |
|---|---|---|---|---|---|---|---|---|---|
| | $C_{CH3OH}$/% | $S_{H2}$/% | $R_{H2}$/% | | $S_{H2}$/% | $R_{H2}$/% | □α($H_2/N_2$) | Carbon deposition (weight%) | Sulfur content (weight%) |
| A1 | 82.7 | 91.2 | 94.3 | 225 | 88.9 | 93.5 | 7403 | 2.84 | 3.03 |
| A2 | 82.4 | 90.4 | 94.1 | 220 | 88.0 | 93.3 | 7321 | 2.91 | 3.06 |
| A3 | 82.1 | 90.1 | 94.0 | 215 | 87.8 | 93.1 | 7065 | 2.93 | 3.08 |
| A4 | 81.9 | 89.8 | 94.0 | 210 | 87.6 | 92.9 | 6903 | 2.97 | 3.11 |
| A5 | 77.1 | 86.2 | 90.8 | 145 | 83.0 | 89.6 | 5581 | 3.96 | 3.32 |
| A6 | 81.2 | 89.3 | 93.7 | 200 | 87.4 | 92.6 | 6863 | 3.05 | 3.18 |
| A7 | 88.5 | 93.6 | 95.0 | 265 | 90.8 | 94.6 | 10257 | 0.28 | 2.35 |
| A8 | 88.0 | 93.3 | 94.8 | 260 | 90.5 | 94.3 | 9776 | 0.32 | 2.44 |
| A9 | 87.6 | 92.9 | 94.7 | 255 | 90.3 | 94.2 | 9604 | 0.37 | 2.58 |
| A10 | 84.7 | 92.2 | 94.4 | 680 | 89.4 | 93.7 | 8587 | 2.63 | 0.02 |
| A11 | 84.4 | 92.1 | 94.3 | 675 | 89.2 | 93.6 | 8531 | 2.69 | 0.03 |
| A12 | 84.1 | 91.9 | 94.2 | 660 | 88.9 | 93.4 | 8346 | 2.75 | 0.05 |
| AD1 | 78.2 | 87.4 | 91.9 | 175 | 83.9 | 90.8 | 6317 | 3.21 | 3.58 |
| AD2 | 78.6 | 87.9 | 92.3 | 180 | 84.5 | 91.4 | 6392 | 3.16 | 3.45 |
| AD3 | 78.0 | 87.0 | 91.4 | 170 | 83.5 | 90.5 | 6261 | 3.28 | 3.80 |
| AD4 | 78.9 | 88.1 | 92.5 | 185 | 84.8 | 91.6 | 6483 | 3.09 | 3.21 |
| AD5 | 75.8 | 84.9 | 89.5 | 120 | 81.6 | 88.0 | 5106 | 4.86 | 5.01 |
| AD6 | 76.5 | 85.7 | 90.3 | 135 | 82.6 | 89.0 | 5356 | 4.21 | 4.48 |
| AD7 | 76.2 | 85.3 | 89.9 | 130 | 82.1 | 88.5 | 5299 | 4.57 | 4.83 |
| E8 | 84.1 | 91.6 | 93.6 | 195 | 89.3 | 92.9 | 9453 | 3.08 | 3.39 |
| E9 | 83.9 | 91.4 | 93.5 | 190 | 89.0 | 92.7 | 8899 | 3.01 | 3.43 |

(c) The retentate side tail gas (consisting of $CO_2$ and $H_2$ in a volume ratio of 1:4) obtained in step (a) by using the composite membrane A1 was introduced into another reactor, such that the gasoline fraction hydrocarbons and partially unreacted $CO_2$ under the catalysis of the catalyst Na-$Fe_3O_4$/HZSM-5 in another composite membrane (containing Pd, Cu, and Ag) were obtained through the following specific operations:

The retentate side tail gas (consisting of $CO_2$ and $H_2$ in a volume ratio of 1:4, the gaseous hourly space velocity of the mixed gas was 5,000 h$^{-1}$) obtained in step (a) by using the composite membrane A1 was introduced under the temperature of 350°C and the pressure of 0.3 MPa; after the mixed gas was separated by another composite membrane, pure hydrogen gas was obtained at the permeate side, the mixed gas of partial hydrogen gas and carbon dioxide was obtained at the retentate side, the gasoline fraction hydrocarbons and partially unreacted $CO_2$ under the catalysis of the catalyst Na-$Fe_3O_4$/HZSM-5 in another composite membrane were obtained, wherein the permeate side component hydrogen gas product was subjected to an on-line analysis by adopting the SCION-456 gas chromatography manufactured by the Shanghai Techcomp Scientific Instrument Co., Ltd. equipped with FID and PDHID, and the change of hydrogen gas purity was monitored in real time; the components of gasoline fraction hydrocarbons and the relative content thereof in the retentate were detected by using the Agilent 7890B chromatograph equipped with TCD and FID, the percentage contents of the unreacted hydrogen gas, carbon dioxide and other raw materials were detected; the carbon dioxide conversion rate, the gasoline fraction hydrocarbon selectivity, and the hydrogen gas recovery rate were calculated based on the detection results, the product was tested for each time interval of 5h; the continuous operation time when the methanol conversion rate was decreased to 90% of the initial value was recorded as the continuous operation time; both the "initial values of reaction" and the "experimental measurement values after reaching the continuous operation time" were shown in Table 11. The gasoline fraction hydrocarbons in the mixed components were enriched and absorbed by light naphtha absorption liquid; when the concentration of residual $CO_2$ after the reaction at the retentate side was sufficiently high, the carbon dioxide component was further enriched and stored after compression.

Carbon dioxide conversion rate ($C_{CO2}$) = molar quantity of carbon dioxide at the reactor outlet / (molar quantity of carbon dioxide at the reactor inlet - molar quantity of carbon dioxide at the reactor outlet).

Selectivity of gasoline fraction hydrocarbons ($S_{gasline}$) = the sum of the molar quantity of $C_5$~$C_{12}$ hydrocarbons at the reactor outlet / the sum of the molar quantity of hydrocarbon compounds at the reactor outlet.

Hydrogen gas recovery rate ($R_{H2}$) = molar quantity of hydrogen gas permeated through the permeate side / molar quantity of hydrogen gas introduced in the reaction.

The hydrogen-nitrogen selectivity ($\alpha(H_2/N_2)$) referred to the ratio of the hydrogen gas permeation and diffusion rate of the palladium membrane at the defect relative to the nitrogen gas permeation and diffusion rate at the defect, the larger value indicated that the palladium membrane had a higher mechanical structure stability, and the composite membrane material had fewer defects. Specifically, the hydrogen gas permeation and diffusion rate ($J_{H2}$) of the palladium membrane and the nitrogen gas permeation and diffusion rate ($J_{N2}$) at the defect under the same conditions (the temperature of 573K, trans-membrane pressure difference of 0.5MPa) were respectively measured; the hydrogen-nitrogen selectivity was calculated according to the formula $\alpha(H_2/N_2) = J_{H2}/J_{N2}$, in combination with the aforementioned measurement methods.

Table 11

| | Initial values of reaction | | | Continuous operation time of composite membrane/h | Experimental measurement values after reaching the continuous operation time | | |
| --- | --- | --- | --- | --- | --- | --- | --- |
| | $C_{CO2}$/% | $S_{gasline}$/% | $R_{H2}$/% | | $S_{gasline}$/% | $R_{H2}$/% | $\alpha(H_2/N_2)$ |
| E1 | 40.5 | 86.8 | 72.6 | 845 | 83.4 | 69.8 | 10325 |
| E2 | 38.8 | 82.5 | 69.9 | 830 | 79.5 | 66.9 | 9417 |
| E3 | 38.5 | 85.1 | 71.5 | 820 | 82.2 | 68.4 | 9657 |
| E4 | 38.2 | 84.8 | 70.6 | 815 | 81.6 | 67.8 | 9582 |
| E5 | 45.4 | 89.2 | 76.3 | 880 | 86.3 | 73.7 | 11799 |
| E6 | 46.8 | 88.7 | 78.6 | 875 | 85.4 | 75.7 | 11723 |
| E7 | 44.5 | 88.6 | 77.2 | 870 | 85.2 | 74.7 | 11316 |
| ED1 | 33.9 | 81.2 | 65.8 | 775 | 77.7 | 63.1 | 8179 |
| ED2 | 36.6 | 84.5 | 67.3 | 825 | 81.5 | 65.0 | 9083 |
| ED3 | 34.2 | 81.0 | 65.3 | 770 | 77.3 | 62.8 | 8097 |
| ED4 | 37.8 | 83.2 | 67.1 | 805 | 80.5 | 64.9 | 8853 |
| ED5 | 25.0 | 68.9 | 55.0 | 655 | 65.3 | 52.8 | 6463 |
| ED6 | 25.5 | 70.6 | 56.0 | 690 | 67.9 | 54.3 | 6853 |
| ED7 | 25.8 | 71.8 | 56.1 | 685 | 68.5 | 54.1 | 6665 |
| ED8 | 20.1 | 61.9 | 49.1 | 605 | 60.0 | 47.3 | 5230 |
| ED9 | 21.6 | 64.3 | 51.0 | 615 | 62.9 | 49.2 | 5963 |

The above content describes in detail the preferred embodiments of the invention, but the invention is not limited thereto. A variety of simple modifications can be made in regard to the technical solutions of the invention within the scope of the technical concept of the invention, including a combination of individual technical features in any other suitable manner, such simple modifications and combinations thereof shall also be regarded as the content disclosed by the invention, each of them falls into the protection scope of the invention.

**Claims**

1. A composite palladium-based alloy material, wherein the composite palladium-based alloy material comprises Pd and a group IB metal element, the full width at half maximum of at least one characteristic peak for $2\theta$ within the range of 5°-90° is less than or equal to 0.1745 in an X-Ray diffraction graph of the composite palladium-based alloy material.

2. The composite palladium-based alloy material according to claim 1, wherein the full width at half maximum of all the characteristic peaks for $2\theta$ within the range of 5°-90° is less than or equal to 0.1745 in an XRD graph of the composite palladium-based alloy material.

3. The composite palladium-based alloy material according to claims 1 or 2, wherein the full width at half maximum of all the characteristic peaks for $2\theta$ within the range of 5°-90° is larger than or equal to 0.01 in an XRD graph of the composite palladium-based alloy material.

4. The composite palladium-based alloy material according to claims 1, 2, or 3, wherein in an XRD graph of the composite palladium-based alloy material, the full width at half maximum of the characteristic peak at $2\theta=40°\pm1°$ is within the range of 0.017-0.02, or the full width at half maximum of the characteristic peak at $2\theta=46°\pm1°$ is within the range of 0.017-0.034, the full width at half maximum of the characteristic peak at $2\theta=69°\pm1°$ is within the range of 0.029-0.036, the full width at half maximum of the characteristic peak at $2\theta=83°\pm1°$ is within the range of 0.031-0.039, the full width at half maximum of the characteristic peak at $2\theta=87°\pm1°$ is within the range of 0.032-0.041.

5. The composite palladium-based alloy material according to claims 1, 2, or 3, wherein in an XRD graph of the composite palladium-based alloy material, the full width at half maximum of the characteristic peak at $2\theta=43°\pm1°$ is within the range of 0.017-0.041, or the full width at half maximum of the characteristic peak at $2\theta=53°\pm1°$ is within the range of 0.024-0.055, the full width at half maximum of the characteristic peak at $2\theta=62°\pm1°$ is within the range of 0.036-0.066, the full width at half maximum of the characteristic peak at $2\theta=70°\pm1°$ is within the range of 0.047-0.068, the full width at half maximum of the characteristic peak at $2\theta=79°\pm1°$ is within the range of

6. The composite palladium-based alloy material according to any one of claims 1-5, wherein the group IB metal element is Au, and in an XRD graph of the composite palladium-based alloy material, the full width at half maximum of the characteristic peak at $2\theta=40°\pm1°$ is denoted as $FWHM_1$, the full width at half maximum of the characteristic peak at $2\theta=46°\pm1°$ is denoted as $FWHM_2$, the full width at half maximum of the characteristic peak at $2\theta=69°\pm1°$ is denoted as $FWHM_3$, the full width at half maximum of the characteristic peak at $2\theta=83°\pm1°$ is denoted as $FWHM_4$, the full width at half maximum of the characteristic peak at $2\theta=87°\pm1°$ is denoted as $FWHM_5$, $FWHM_1$, $FWHM_2$, $FWHM_3$, $FWHM_4$ and $FWHM_5$ satisfy the following formula I:

$$FWHM_x = (FWHM_{x-1} + FWHM_{x+1})/2 \pm W \qquad \text{Formula I}$$

wherein x =2, 3, or 4, and W is within the range of 0.0003-0.0064.

7. The composite palladium-based alloy material according to any one of claims 1-6, wherein the composite palladium-based alloy material has a lattice parameter k within the range of 0.3836-0.4369nm.

8. The composite palladium-based alloy material according to any one of claims 1-7, wherein the composite palladium-based alloy material has a lattice parameter k within the range of 0.4075-0.4289nm.

9. The composite palladium-based alloy material according to any one of claims 1-8, wherein the composite palladium-based alloy material has a crystal structure of face-centered cubic close packing or body-centered cubic packing;

   and/or the group IB metal element is at least one of Cu, Ag, and Au;
   and/or the molar ratio of Pd to the group IB metal element is 1: (0.01-10), preferably 1: (0.1-1.6), more preferably 1: (0.2-0.8);
   and/or, the composite palladium-based alloy material further contains Ni, and the molar ratio of Pd/Ni is 1: (0.35-0.65);
   and/or the composite palladium-based alloy material has a thickness within the range of 0.5-30$\mu$m, preferably within the range of 5-15$\mu$m.

10. A composite membrane, is **characterized in that** the composite membrane comprises a composite palladium-based alloy material, and a hydrophobic group-modified silica-alumina molecular sieve attached on a surface of said composite palladium-based alloy material, wherein said composite palladium-based alloy material is the composite palladium-based alloy material according to any one of claims 1-9.

11. The composite membrane according to claim 10, wherein the composite membrane has a water contact angle larger than or equal to 90°, preferably larger than or equal to 105°;

    and/or the composite membrane is a tubular membrane;
    and/or, the composite membrane further comprises a support body, the composite palladium-based alloy material is attached to the support body, and the support body has a thickness within the range of 0.1-20mm, preferably within the range of 2-5 mm.

12. The composite membrane according to claim 10 or 11, wherein the ratio of peak areas for peaks with chemical shifts near -113ppm and -103ppm of the hydrophobic group-modified silica-alumina molecular sieve in the $^{29}$Si MAS nuclear magnetic resonance spectrogram is within the range of 6-12;

    and/or the silicon-aluminum molecular sieve is at least one of ZSM-5, ZSM-11, ZSM-12, ZSM-23, ZSM-34, 3A molecular sieve, 4A molecular sieve, 5A molecular sieve, SAPO-31, SAPO-34, SAPO-44, RUB-13, MCM-68, Y-type molecular sieve, and mordenite;
    and/or the hydrophobic group-modified silica-alumina molecular sieve has a thickness within the range of 1-100$\mu$m, preferably within the range of 5-30$\mu$m;
    and/or the hydrophobic group-modified silica-alumina molecular sieve has a molar ratio of Si/Al within the range of (2-100): 1, preferably within the range of (2.5-20): 1; an average particle diameter within the range of 60-380nm, preferably within the range of 150-200nm; an average pore diameter within the range of 0.3-230nm, preferably within the range of 1-18nm; a specific surface area within the range of 35-750m$^2$/g, preferably within the range of 65-480m$^2$/g; a crystallinity larger than or equal to 90%, preferably within the range of 95-99%.

13. The composite membrane according to claims 10, 11, or 12, wherein the composite membrane further comprises group VIB metal oxide nanoparticles attached on a surface of the hydrophobic group-modified silica-alumina molecular sieve, said group VIB metal oxide nanoparticles have an average particle diameter within the range of 50-200nm;
    preferably, the group VIB metal oxide nanoparticles are contained in an amount such that the molar ratio of the group VIB metal to Pd is within the range of 0.01-0.5.

14. Use of the composite membrane according to any one of claims 10-13 in hydrogen production via steam reforming.

15. A method for hydrogen production via steam reforming, it is **characterized in that** the method comprises the following steps:

    in the presence of a catalyst, introducing alcohol and steam into a first reactor provided with a first composite membrane to perform a reforming reaction, wherein the first composite membrane is the composite membrane according to any one of claims 10-13; the alcohol and steam are introduced from a side adjacent to the hydrophobic group-modified silica-alumina molecular sieve of the first composite membrane, such that hydrogen gas generated by the reforming reaction is removed from the first reactor by permeating through the first composite membrane via the side of the hydrophobic group-modified silica-alumina molecular sieve;
    optionally, the method further comprises a step of introducing a gas that is not permeated through the first composite membrane into a second reactor provided with a second composite membrane for performing carbon dioxide capture or conversion.

16. The method according to claim 15, wherein the second composite membrane comprises a palladium membrane and a silica-alumina molecular sieve loaded with sodium-modified nanometer $Fe_3O_4$ attached on a surface of said palladium membrane.

17. The method according to claim 16, wherein the silica-alumina molecular sieve of said second composite membrane is at least one of HZSM-5, HZSM-11, HZSM-12, HZSM-23, HZSM-34, HY, HMCM-22, HBEA, and HMOR;

    and/or the silica-alumina molecular sieves loaded with sodium-modified nanometer $Fe_3O_4$ have a thickness

within the range of 100-3,750nm, preferably within the range of 350-1,500nm;

and/or the silica-alumina molecular sieve in the second composite membrane has a molar ratio of Si/Al within the range of (2-50): 1, preferably within the range of (5-20): 1; an average particle diameter within the range of 50-420nm, preferably within the range of 150-300nm; an average pore diameter within the range of 0.25-225nm, preferably within the range of 0.75-35nm; a specific surface area within the range of 25-600$m^2$/g, preferably within the range of 50-500$m^2$/g; a crystallinity larger than or equal to 92%, preferably within the range of 96-99%;

and/or the sodium-modified nanometer $Fe_3O_4$ in the second composite membrane has an average particle diameter within the range of 5-300nm, preferably within the range of 10-100 nm;

and/or the sodium-modified nanometer $Fe_3O_4$ in the second composite membrane is loaded in an amount such that a molar ratio of Pd/Fe is within the range of 1: (0.001-0.1), preferably within the range of 1: (0.001-0.03);

and/or the sodium-modified nanometer $Fe_3O_4$ in the second composite membrane has a molar ratio of Na/Fe within the range of 1: (1-10), preferably within the range of 1: (3-6).

FIG. 1

FIG. 2a

FIG. 2b

FIG. 2c

FIG. 3

FIG. 4

FIG. 5

FIG. 6

FIG. 7

FIG. 8

## INTERNATIONAL SEARCH REPORT

| International application No. |
|---|
| **PCT/CN2023/107041** |

**A.    CLASSIFICATION OF SUBJECT MATTER**

B01D 71/02(2006.01)i;    B01D 53/22(2006.01)i;    B01D 69/12(2006.01)i

According to International Patent Classification (IPC) or to both national classification and IPC

**B.    FIELDS SEARCHED**

Minimum documentation searched (classification system followed by classification symbols)

IPC:    B01D71/-;    B01D53/-;    B01D69/-

Documentation searched other than minimum documentation to the extent that such documents are included in the fields searched

Electronic data base consulted during the international search (name of data base and, where practicable, search terms used)

CNTXT, ENTXTC, ENTXT, DWPI, Web of Science, CNKI: 钯基, 钯合金, IB, 铜, 银, 金, XRD, 半峰宽, 制氢, 分子筛, 中国石油化工, Pd, Cu, Ag, Au, hydrogen, FWHM, Scherrer, molecular

**C.    DOCUMENTS CONSIDERED TO BE RELEVANT**

| Category* | Citation of document, with indication, where appropriate, of the relevant passages | Relevant to claim No. |
|---|---|---|
| X | US 2005169807 A1 (THE RESEARCH FOUNDATION OF STATE UNIVERSITY OF NEW YORK et al.) 04 August 2005 (2005-08-04)<br>description, paragraphs [0058]-[0060], and figures 7, 8 and 10 | 1-17 |
| A | CN 108686522 A (DALIAN INSTITUTE OF CHEMICAL PHYSICS, CHINESE ACADEMY OF SCIENCES) 23 October 2018 (2018-10-23)<br>entire document | 1-17 |
| A | CN 111482184 A (JIANGSU UNIVERSITY) 04 August 2020 (2020-08-04)<br>entire document | 1-17 |
| A | JP 2017164735 A (CATALER CORP.) 21 September 2017 (2017-09-21)<br>entire document | 1-17 |
| A | CN 114011372 A (QILU UNIVERSITY OF TECHNOLOGY) 08 February 2022 (2022-02-08)<br>entire document | 1-17 |
| A | JP 2021059770 A (KYORITSU KAGAKU SANGYO CO., LTD.) 15 April 2021 (2021-04-15)<br>entire document | 1-17 |

☑ Further documents are listed in the continuation of Box C.            ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 November 2023** | **14 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/107041**

**C.** **DOCUMENTS CONSIDERED TO BE RELEVANT**

| Category* | Citation of document, with indication, where appropriate, of the relevant passages | Relevant to claim No. |
|---|---|---|
| A | JP 2020168588 A (THE UNIVERSITY OF TOKYO) 15 October 2020 (2020-10-15)<br>entire document | 1-17 |

Form PCT/ISA/210 (second sheet) (July 2022)

**INTERNATIONAL SEARCH REPORT**
**Information on patent family members**

International application No.

**PCT/CN2023/107041**

| Patent document cited in search report | | | Publication date (day/month/year) | Patent family member(s) | | | Publication date (day/month/year) |
|---|---|---|---|---|---|---|---|
| US | 2005169807 | A1 | 04 August 2005 | US | 7521252 | B2 | 21 April 2009 |
| | | | | WO | 2005078434 | A2 | 25 August 2005 |
| | | | | WO | 2005078434 | A3 | 27 October 2005 |
| CN | 108686522 | A | 23 October 2018 | | None | | |
| CN | 111482184 | A | 04 August 2020 | CN | 111482184 | B | 21 March 2023 |
| JP | 2017164735 | A | 21 September 2017 | JP | 6851219 | B2 | 31 March 2021 |
| CN | 114011372 | A | 08 February 2022 | | None | | |
| JP | 2021059770 | A | 15 April 2021 | JP | 7300172 | B2 | 29 June 2023 |
| JP | 2020168588 | A | 15 October 2020 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210841761
- CN 202210843337
- CN 202210843306
- CN 202210843326
- CN 108686522 A